(19) Europäisches Patentamt
European Patent Office
Office européen des brevets

(11) **EP 4 576 912 A1**

(12) **EUROPEAN PATENT APPLICATION**
published in accordance with Art. 153(4) EPC

(43) Date of publication:
**25.06.2025 Bulletin 2025/26**

(21) Application number: **23867358.6**

(22) Date of filing: **13.09.2023**

(51) International Patent Classification (IPC):
**H04W 72/541** (2023.01)

(52) Cooperative Patent Classification (CPC):
**H04W 4/70; H04W 72/25; H04W 72/541**

(86) International application number:
**PCT/CN2023/118454**

(87) International publication number:
**WO 2024/061069 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.09.2022 CN 202211151512
02.11.2022 CN 202211359574**

(71) Applicant: **Huawei Technologies Co., Ltd.
Shenzhen, Guangdong 518129 (CN)**

(72) Inventors:
• **WU, Yue
Shenzhen, Guangdong 518129 (CN)**
• **LI, Xueru
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **SIDELINK COMMUNICATION METHOD AND APPARATUS**

(57)    Embodiments of this application provide a sidelink communication method and a communication apparatus, which are applicable to a sidelink communication scenario. The method may include: An SBFD device indicates, to another device, whether the SBFD device recommends, as a receiving resource, a resource that overlaps a second resource in time domain and that is adjacent to the second resource in frequency domain, where the second resource is a reserved sending resource of the SBFD device. According to this application, not only resource selection can be implemented, and a guard band between receiving and sending resources can be dynamically configured in a resource selection process, but also self-interference caused when the SBFD device simultaneously receives and sends data can be reduced. For example, when interference between sending data by the SBFD device on the second resource and receiving data by the SBFD device on the resource that overlaps the second resource in time domain and that is adjacent to the second resource in frequency domain is relatively large, the SBFD device may indicate, to another device, that the resource that overlaps the second resource in time domain and that is adjacent to the second resource in frequency domain is not recommended as a receiving resource, to reduce self-interference caused when the SBFD device simultaneously receives and sends data.

FIG. 4

**Description**

This application claims priorities to Chinese Patent Application No. 202211151512.9, filed with the China National Intellectual Property Administration on September 21, 2022 and entitled "COMMUNICATION METHOD, APPARATUS, AND SYSTEM", and to Chinese Patent Application No. 202211359574.9, filed with the China National Intellectual Property Administration on November 2, 2022 and entitled "SIDELINK COMMUNICATION METHOD AND APPARATUS", both of which are incorporated herein by reference in their entireties.

**TECHNICAL FIELD**

This application relates to the field of sidelink communication, and more specifically, to a sidelink communication method and an apparatus.

**BACKGROUND**

In a subband non-overlapping full duplex (subband non-overlapping full duplex, SBFD) technology, duplex enhancement is performed on a network device, to support more flexible uplink (uplink, UL) and downlink (downlink, DL) resource configuration in network deployment. The SBFD technology can improve uplink coverage and reduce a feedback delay of a hybrid automatic repeat request (hybrid automatic repeat request, HARQ), and is a very promising technology in uplink-dominant application scenarios such as a smart factory, smart mining, and smart steel.

A sidelink (sidelink, SL) is different from a UL and a DL, and the SL is mainly a link technology introduced to support direct communication between terminal devices. Therefore, if the SBFD technology is introduced in the SL, how a terminal device selects a resource is a problem to be resolved.

**SUMMARY**

This application provides a sidelink communication method and a communication apparatus, to provide a resource selection manner for a terminal device after an SBFD technology is introduced in an SL, so as to reduce self-interference caused when the terminal device simultaneously receives and sends data.

According to a first aspect, a sidelink communication method is provided. The method may be performed by a terminal device, or may be performed by a component (for example, a chip or a circuit) of a terminal device. This is not limited. For ease of description, the following uses an example in which the method is performed by a first terminal device for description.

The method may include: The first terminal device sends first information to a second terminal device, where the first information indicates whether the first terminal device uses a first resource as a receiving resource, the first resource is a resource that overlaps a second resource in time domain and that is adjacent to the second resource in frequency domain, the second resource is a reserved sending resource of the first terminal device, and the first terminal device is a subband non-overlapping full duplex device.

Based on the foregoing technical solution, the first terminal device may determine, based on an actual communication status, whether to use, as a receiving resource, a resource that overlaps the reserved sending resource of the first terminal device in time domain and that is adjacent to the reserved sending resource of the first terminal device in frequency domain, and provide an indication for another device. In this way, when sending data to the first terminal device, the another device may exclude a candidate resource based on the indication of the first terminal device. According to this application, not only resource selection can be implemented, but also self-interference caused when the terminal device simultaneously receives and sends data can be reduced. For example, when sending data by the first terminal device on the second resource causes relatively large interference to receiving data by the first terminal device on the first resource, the first terminal device may indicate, to another device, that the first resource is not used as the receiving resource, thereby reducing self-interference caused when the first terminal device simultaneously receives and sends data.

In addition, according to this application, the first terminal device determines, based on an actual communication status, whether to use, as a receiving resource, a resource that overlaps the reserved sending resource of the first terminal device in time domain and that is adjacent to the reserved sending resource of the first terminal device in frequency domain, so that a guard band (guard band, GB) between receiving and sending resources (for example, receiving and sending subbands) can be dynamically configured in a resource selection process, thereby improving flexibility of GB configuration and reducing an unnecessary resource waste. For example, the resource that overlaps the reserved sending resource of the first terminal device in time domain and that is adjacent to the reserved sending resource of the first terminal device in frequency domain may be considered as a guard band. If the first terminal device determines, based on an actual communication status, not to use, as a receiving resource, the resource that overlaps the reserved sending resource of the first terminal device in time domain and that is adjacent to the reserved sending resource of the first terminal device in frequency domain, the receiving resource may be used as a guard band between the reserved sending resource and another resource (for example, another receiving resource). If the first terminal device determines, based on an actual communication status, to use, as a receiving resource, the resource that overlaps the reserved sending resource of the first terminal device in time domain and that is adjacent to the reserved sending resource of the first terminal device in frequency domain, it is equivalent that a guard band may not be configured between the reserved sending resource and the receiving resource. It can be learned that, according to embodiments of this application, a guard band between receiving and sending resources (for example, receiving and sending subbands) can be dynamically configured in a resource selection process.

With reference to the first aspect, in some implementations of the first aspect, the first information is carried in sidelink control information.

With reference to the first aspect, in some implementations of the first aspect, the sidelink control information is carried on a physical sidelink control channel or a physical sidelink shared channel.

With reference to the first aspect, in some implementations of the first aspect, the sidelink control information further indicates the second resource.

Based on the foregoing technical solution, the first terminal device uses the same sidelink control information to carry the first information and information about the second resource. This helps another device learn, based on the sidelink control information, of a position of the first resource indicated in the first information.

With reference to the first aspect, in some implementations of the first aspect, the method further includes: The first terminal device sends second information to the second terminal device, where the second information indicates an identifier of the first terminal device.

Based on the foregoing technical solution, the first terminal device may further indicate the identifier of the first terminal device to another device. This helps the another device identify, based on the identifier of the first terminal device, a specific terminal device mentioned in the first information, and then determine a candidate resource based on the first information when the another device sends data to the terminal device.

With reference to the first aspect, in some implementations of the first aspect, before the first terminal device sends the first information to the second terminal device, the method further includes: The first terminal device determines the first information.

With reference to the first aspect, in some implementations of the first aspect, that the first terminal device determines the first information includes: The first terminal device determines the first information based on at least one of the following: first power and second power, where the first power is transmit power of the first terminal device on the second resource, and the second power is residual self-interference power of the first terminal device on the first resource.

For example, the first terminal device may determine the second power by using the first power and a ratio of the first power to the second power. For example, the ratio of the first power to the second power may be preconfigured, or may be obtained by the first terminal device through measurement.

With reference to the first aspect, in some implementations of the first aspect, that the first terminal device determines the first information based on at least one of the following: first power and second power includes: When the first power is greater than a first threshold, the first information determined by the first terminal device indicates that the first terminal device does not use the first resource as the receiving resource; or when the first power is less than or equal to the first threshold, the first information determined by the first terminal device indicates that the first terminal device uses the first resource as the receiving resource; or when the second power is greater than a second threshold, the first information determined by the first terminal device indicates that the first terminal device does not use the first resource as the receiving resource; or when the second power is less than or equal to the second threshold, the first information determined by the first terminal device indicates that the first terminal device uses the first resource as the receiving resource.

For example, the first terminal device preferentially determines the first information by using the second power.

For example, that the first terminal device does not use the first resource as the receiving resource includes: A candidate resource set for the first terminal device to receive data does not include the first resource.

With reference to the first aspect, in some implementations of the first aspect, the method further includes: The first terminal device determines a third resource, where the third resource is a receiving resource of the first terminal device; and the first terminal device determines whether to send data on a fourth resource, where the fourth resource is a resource that overlaps the third resource in time domain and that is adjacent to the third resource in frequency domain.

Based on the foregoing technical solution, the first terminal device may choose, based on the receiving resource of the first terminal device, whether to send data on a resource that overlaps the receiving resource in time domain and that is adjacent to the receiving resource in frequency domain. In this way, not only sending resource selection can be implemented, and a guard band between receiving and sending resources (for example, receiving and sending subbands) can be dynamically configured in a resource selection process, but also self-interference caused when the terminal device simultaneously receives and sends data can be reduced. For example, when sending data by the first terminal device on the fourth resource causes relatively large interference to receiving data by the first terminal device on the third resource, the first terminal device may not send the data on the fourth resource.

With reference to the first aspect, in some implementations of the first aspect, that the first terminal device determines whether to send the data on the fourth resource includes: The first terminal device determines, based on at least one of the following: third power and fourth power, whether to send the data on the fourth resource, where the third power is transmit power of the first terminal device on the fourth resource, and the fourth power is residual self-interference power of the first terminal device on the third resource.

With reference to the first aspect, in some implementations of the first aspect, that the first terminal device determines, based on at least one of the following: the third power and the fourth power, whether to send the data on the fourth resource includes: When the third power is greater than a third threshold, the first terminal device determines not to send the data on the fourth resource; or when the third power is less than or equal to the third threshold, the first terminal device determines to send the data on the fourth resource; or when the fourth power is greater than a fourth threshold, the first terminal device determines not to send the data on the fourth resource; or when the fourth power is less than or equal to the fourth threshold, the first terminal device determines to send the data on the fourth resource.

For example, the first terminal device preferentially determines, by using the fourth power, whether to send the data on the fourth resource.

For example, that the first terminal device does not send the data on the fourth resource includes: A candidate resource set for the first terminal device to send data does not include the fourth resource.

According to a second aspect, a sidelink communication method is provided. The method may be performed by a terminal device, or may be performed by a component (for example, a chip or a circuit) of a terminal device. This is not limited. For ease of description, the following uses an example in which the method is performed by a second terminal device for description.

The method may include: The second terminal device receives first information from a first terminal device, where the first information indicates whether the first terminal device uses a first resource as a receiving resource, the first resource is a resource that overlaps a second resource in time domain and that is adjacent to the second resource in frequency domain, the second resource is a reserved sending resource of the first terminal device, and the first terminal device is a subband non-overlapping full duplex device; and the second terminal device determines, based on the first information, a candidate resource set for sending data to the first terminal device.

With reference to the second aspect, in some implementations of the second aspect, when the first information indicates that the first terminal device does not use the first resource as the receiving resource, the candidate resource set for sending data to the first terminal device does not include the first resource.

With reference to the second aspect, in some implementations of the second aspect, the method further includes: The second terminal device receives second information from the first terminal device, where the second information indicates an identifier of the first terminal device. That the second terminal device determines, based on the first information, the candidate resource set for sending data to the first terminal device includes: The second terminal device determines, based on the first information and the second information, the candidate resource set for sending data to the first terminal device.

For beneficial effects of the second aspect, refer to the related descriptions in the first aspect. Details are not described herein again.

According to a third aspect, a sidelink communication method is provided. The method may be performed by a terminal device, or may be performed by a component (for example, a chip or a circuit) of a terminal device. This is not limited. For ease of description, the following uses an example in which the method is performed by a first terminal device for description.

The method may include: The first terminal device sends third information to a second terminal device, where the third information indicates that a first physical sidelink feedback channel PSFCH is a channel for the first terminal device to receive or send feedback information, the first PSFCH is one of at least two PSFCHs, and the first terminal device is a subband non-overlapping full duplex device, where the third information indicates that the first PSFCH is a channel for the first terminal device to receive feedback information, and the first terminal device receives the feedback information on the first PSFCH; or the third information indicates that the first PSFCH is a channel for the first terminal device to send feedback information, and the first terminal device sends the feedback information on the first PSFCH.

For example, each of the at least two PSFCHs is mapped to a PSSCH in an entire resource pool.

Based on the foregoing technical solution, a PSFCH channel may be divided into at least two PSFCHs (or at least two groups) in frequency domain. In this way, the first terminal device may choose to send feedback information and receive feedback information on different PSFCHs. For example, the first terminal device sends feedback information on one PSFCH, and receives feedback information on another PSFCH. Therefore, a conflict and a self-interference problem that occur when the first terminal device receives and sends feedback information on a same PSFCH can be reduced.

With reference to the third aspect, in some implementations of the third aspect, the third information is carried in sidelink control information, and the feedback information is used to feed back a receiving status of data scheduled by the sidelink control information.

With reference to the third aspect, in some implementations of the third aspect, each of the at least two PSFCHs includes a plurality of frequency domain units in frequency domain, and resources occupied by all of the at least two PSFCHs overlap in time domain, and are separated by at least one frequency domain unit in frequency domain.

With reference to the third aspect, in some implementations of the third aspect, the method further includes: The first terminal device obtains fourth information, where the fourth information indicates information about a resource occupied by at least one of the at least two PSFCHs.

For example, the fourth information is configuration information of a resource pool.

For example, that the first terminal device obtains the fourth information includes: The first terminal device receives the fourth information. For example, the first terminal device receives the fourth information from a network device.

For example, that the first terminal device obtains the fourth information includes: The first terminal device determines the fourth information. For example, the first terminal device determines or reads the fourth information.

With reference to the third aspect, in some implementations of the third aspect, the information about the resource occupied by the at least one of the at least two PSFCHs includes at least one of the following: a quantity of frequency domain units occupied by the at least one PSFCH, a start position of a frequency domain resource occupied by the at least one PSFCH, and an end position of the frequency domain resource occupied by the at least one PSFCH.

With reference to the third aspect, in some implementations of the third aspect, the at least two PSFCHs include a second PSFCH; and the third information indicates that the first PSFCH is a channel for the first terminal device to receive feedback information, and the third information indicates that the second PSFCH is a channel for the first terminal device to send feedback information; or the third information indicates that the first PSFCH is a channel for the first terminal device to send feedback information, and the third information indicates that the second PSFCH is a channel for the first terminal device to receive feedback information.

With reference to the third aspect, in some implementations of the third aspect, the at least two PSFCHs further include a second PSFCH; and the third information indicates that the first PSFCH is a channel for the first terminal device to receive feedback information, and the second PSFCH is a channel for the first terminal device to send feedback information; or the third information indicates that the first PSFCH is a channel for the first terminal device to send feedback information, and the second PSFCH is a channel for the first terminal device to receive feedback information.

According to a fourth aspect, a sidelink communication method is provided. The method may be performed by a terminal device, or may be performed by a component (for example, a chip or a circuit) of a terminal device. This is not limited. For ease of description, the following uses an example in which the method is performed by a second terminal device for description.

The method may include: The second terminal device receives third information from a first terminal device, where the third information indicates that a first physical sidelink feedback channel PSFCH is a channel for the first terminal device to receive or send feedback information, the first PSFCH is one of at least two PSFCHs, and the first terminal device is a subband non-overlapping full duplex device, where the third information indicates that the first PSFCH is a channel for the first terminal device to receive feedback information, and the second terminal device sends the feedback information to the first terminal device on the first PSFCH; or the third information indicates that the first PSFCH is a channel for the first terminal device to send feedback information, and the second terminal device monitors the feedback information from the first terminal device on the first PSFCH.

With reference to the fourth aspect, in some implementations of the fourth aspect, the third information is carried in sidelink control information, and the feedback information is used to feed back a receiving status of data scheduled by the sidelink control information.

With reference to the fourth aspect, in some implementations of the fourth aspect, each of the at least two PSFCHs includes a plurality of frequency domain units in frequency domain, and resources occupied by all of the at least two PSFCHs overlap in time domain, and are separated by at least one frequency domain unit in frequency domain.

With reference to the fourth aspect, in some implementations of the fourth aspect, the method further includes: The second terminal device obtains fourth information, where the fourth information indicates information about a resource occupied by at least one of the at least two PSFCHs.

For example, that the second terminal device obtains the fourth information includes: The second terminal device receives the fourth information. For example, the second terminal device receives the fourth information from a network device.

For example, that the second terminal device obtains the fourth information includes: The second terminal device determines the fourth information. For example, the second terminal device determines or reads the fourth information.

With reference to the fourth aspect, in some implementations of the fourth aspect, the information about the resource occupied by the at least one of the at least two PSFCHs includes at least one of the following: a quantity of frequency domain units occupied by the at least one PSFCH, a start position of a frequency domain resource occupied by the at least one PSFCH, and an end position of the frequency domain resource occupied by the at least one PSFCH.

With reference to the fourth aspect, in some implementations of the fourth aspect, the at least two PSFCHs further include a second PSFCH; and the third information indicates that the first PSFCH is a channel for the first terminal device to receive feedback information, and the second PSFCH is a channel for the first terminal device to send feedback information; or the third information indicates that the first PSFCH is a channel for the first terminal device to send feedback information, and the second PSFCH is a channel for the first terminal device to receive feedback information.

For beneficial effects of the fourth aspect, refer to the related descriptions in the third aspect. Details are not described herein again.

According to a fifth aspect, a sidelink communication method is provided. The method may be performed by a terminal device, or may be performed by a component (for example, a chip or a circuit) of a terminal device. This is not limited. For ease of description, the following uses an example in which the method is performed by a first terminal device for description.

The method may include: The first terminal device determines a third resource, where the third resource is a receiving resource of the first terminal device; and the first terminal device determines whether to send data on a fourth resource, where the fourth resource is a resource that overlaps the third resource in time domain and that is adjacent to the third resource in frequency domain, and the first terminal device is a subband non-overlapping full duplex device.

Based on the foregoing technical solution, the first terminal device may choose, based on the receiving resource of the first terminal device, whether to send data on a resource that overlaps the receiving resource in time domain and that is adjacent to the receiving resource in frequency domain. In this way, not only sending resource selection can be implemented, but also self-interference caused when the terminal device simultaneously receives and sends data can be reduced. For example, when sending data by the first terminal device on the fourth resource causes relatively large interference to receiving data by the first terminal device on the third resource, the first terminal device may not send the data on the fourth resource.

In addition, according to this application, the first terminal device determines, based on an actual communication status, whether to use, as a sending resource, a resource that overlaps the third resource in time domain and that is adjacent to the third resource in frequency domain, so that a guard band between receiving and sending resources (for example, receiving and sending subbands) can be dynamically configured in a resource selection process, thereby improving flexibility of GB configuration and reducing an unnecessary resource waste. For example, the resource that overlaps the third resource in time domain and that is adjacent to the third resource in frequency domain may be considered as a guard band. If the first terminal device determines, based on an actual communication status, not to use, as a sending resource, the resource that overlaps the third resource in time domain and that is adjacent to the third resource in frequency domain, the resource may be used as a guard band between the third resource and another resource. If the first terminal device determines, based on an actual communication status, to use, as a sending resource, the resource that overlaps the third resource in time domain and that is adjacent to the third resource in frequency domain, it is equivalent that a guard band may not be configured between the resource and the third resource. It can be learned that, according to embodiments of this application, a guard band between receiving and sending resources (for example, receiving and sending subbands) can be dynamically configured in a resource selection process.

With reference to the fifth aspect, in some implementations of the fifth aspect, that the first terminal device determines whether to send the data on the fourth resource includes: The first terminal device determines, based on at least one of the following: third power and fourth power, whether to send the data on the fourth resource, where the third power is transmit power of the first terminal device on the fourth resource, and the fourth power is residual self-interference power of the first terminal device on the third resource.

With reference to the fifth aspect, in some implementations of the fifth aspect, that the first terminal device determines, based on at least one of the following: the third power and the fourth power, whether to send the data on the fourth resource includes: When the third power is greater than a third threshold, the first terminal device determines not to send the data on the fourth resource; or when the third power is less than or equal to the third threshold, the first terminal device determines to send the data on the fourth resource; or when the fourth power is greater than a fourth threshold, the first terminal device determines not to send the data on the fourth resource; or when the fourth power is less than or equal to the fourth threshold, the first terminal device determines to send the data on the fourth resource.

For example, the first terminal device preferentially determines, by using the fourth power, whether to send the data on the fourth resource.

For example, that the first terminal device does not send the data on the fourth resource includes: A candidate resource set for the first terminal device to send data does not include the fourth resource.

For beneficial effects of the fifth aspect, refer to the related descriptions in the first aspect. Details are not described herein again.

According to a sixth aspect, a sidelink communication method is provided. The method may be performed by a terminal device, or may be performed by a component (for example, a chip or a circuit) of a terminal device. This is not limited. For ease of description, the following uses an example in which the method is performed by a first terminal device for description.

The method may include: The first terminal device determines to send first data on M first resource elements and send second data on N second resource elements, where the N second resource elements are determined based on the M first resource elements, at least one of the M first resource elements and at least one of the N second resource elements overlap in time domain and are contiguous in frequency domain, M and N are integers greater than 1 or equal to 1, and the first terminal device is a subband non-overlapping full duplex device.

According to a seventh aspect, a communication apparatus is provided. The apparatus is configured to perform the method in any one of the possible implementations of the first aspect to the sixth aspect. Specifically, the apparatus may include units and/or modules configured to perform the method in any one of the possible implementations of the first aspect to the sixth aspect, for example, a processing unit and/or a communication unit.

In an implementation, the apparatus is a terminal device (for example, a first terminal device or a second terminal device). When the apparatus is a terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device (for example, a first terminal device or a second terminal device). When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighth aspect, a communication apparatus is provided. The apparatus includes at least one processor, configured to execute a computer program or instructions stored in a memory, to perform the method in any one of the possible implementations of the first aspect to the sixth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a terminal device (for example, a first terminal device or a second terminal device).

In another implementation, the apparatus is a chip, a chip system, or a circuit used in a terminal device (for example, a first terminal device or a second terminal device).

According to a ninth aspect, this application provides a processor, configured to perform the methods provided in the first aspect to the sixth aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code to be executed by a device, and the program code is used to perform the method in any one of the possible implementations of the first aspect to the sixth aspect.

According to an eleventh aspect, a computer program product including instructions is provided. When the computer program product runs on a computer, the computer is enabled to perform the method in any one of the possible implementations of the first aspect to the sixth aspect.

According to a twelfth aspect, a communication system is provided, including the first terminal device and the second terminal device described above.

BRIEF DESCRIPTION OF DRAWINGS

FIG. 1 is a diagram of a wireless communication system applicable to an embodiment of this application;
FIG. 2 is a diagram of SBFD, TDD, and FDD;
FIG. 3 is a diagram of dividing a resource pool into two subbands and a GB;
FIG. 4 is a diagram of a sidelink communication method 400 according to an embodiment of this application;
FIG. 5 is a diagram of receiving resource selection of a first terminal device applicable to an embodiment of this application;
FIG. 6 is a diagram of a sidelink communication method 600 according to another embodiment of this application;
FIG. 7 is a diagram of sending resource selection of a first terminal device applicable to an embodiment of this application;
FIG. 8 is a diagram of a sidelink communication method 800 according to another embodiment of this application;
FIG. 9 is a diagram of mapping from a PSSCH to a PSFCH applicable to an embodiment of this application;
FIG. 10 is a diagram of a sidelink communication method 1000 according to another embodiment of this application;
FIG. 11 is a diagram of determining a sending resource by a higher layer applicable to an embodiment of this application;

FIG. 12 is a block diagram of a communication apparatus 1200 according to an embodiment of this application;

FIG. 13 is a block diagram of a communication apparatus 1300 according to an embodiment of this application; and

FIG. 14 is a block diagram of a chip system 1400 according to an embodiment of this application.

## DESCRIPTION OF EMBODIMENTS

The following describes the technical solutions in embodiments of this application with reference to the accompanying drawings.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or other communication systems.

In an example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. V2V refers to communication between vehicles. V2P refers to communication between a vehicle and a person (including a pedestrian, a bicycle rider, a driver, or a passenger). V2I refers to communication between a vehicle and an infrastructure. The infrastructure is, for example, a road side unit (road side unit, RSU) or a network device. The RSU includes two types: a terminal-type RSU and a base station-type RSU. Because the terminal-type RSU is deployed on a road side, the terminal-type RSU is in a non-mobile state, and mobility does not need to be considered. The base station-type RSU can provide timing synchronization and resource scheduling for a vehicle that communicates with the base station-type RSU. V2N refers to communication between a vehicle and a network device. It may be understood that the foregoing descriptions are examples, and are not limited in embodiments of this application. For example, V2X may further include NR system-based V2X communication in current 3GPP Rel-16 and later releases.

An example is used for description. The D2D communication may include communication between a programmable logic controller (programmable logic controller, PLC) and a subordinate device of the programmable logic controller, for example, communication between the PLC and a sensor, or communication between the PLC and an actuator. The sensor may be, for example, a pressure sensor or a temperature sensor. The actuator may be, for example, a valve terminal or a heater. For example, the PLC receives, in each time period, data measured by all sensors, and sends an execution instruction to the actuator in each time period.

A terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile network (public land mobile network, PLMN), or the like. This is not limited in embodiments of this application.

By way of example and not limitation, in embodiments of this application, the terminal device may alternatively be a wearable device. The wearable device may also be referred to as a wearable intelligent device or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands or smart jewelry for monitoring physical signs.

In embodiments of this application, an apparatus configured to implement a function of a terminal device may be a terminal device, or may be an apparatus that can support a terminal device in implementing the function, for example, a chip system or a chip. The apparatus may be installed in the terminal device. In embodiments of this application, the chip system may include a chip, or may include a chip and another discrete component.

A network device in embodiments of this application may be a device configured to communicate with a terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that undertakes a base station function in D2D, V2X, or M2M communication, a network side device in a 6G network, a device that undertakes a base station function in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

In embodiments of this application, an apparatus configured to implement a function of a network device may be a network device, or may be an apparatus that can support the network device in implementing the function, for example, a chip system or a chip. The apparatus may be installed in the network device. In embodiments of this application, the chip system may include a chip, or may include a chip and another discrete component.

The network device and the terminal device may be deployed on land, including an indoor or outdoor device, a handheld device, or a vehicle-mounted device; or may be deployed on a water surface; or may be deployed on a plane, a balloon, or a satellite in the air. A scenario in which the network device and the terminal device are located is not limited in embodiments of this application.

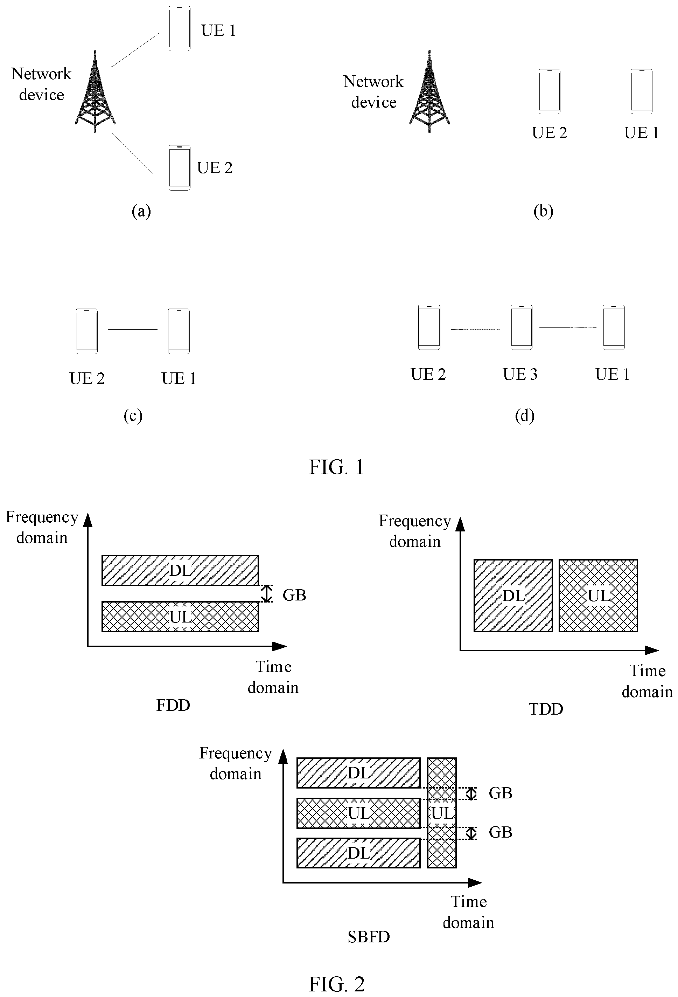

First, a communication system applicable to embodiments of this application is briefly described below with reference to FIG. 1.

FIG. 1 is a diagram of a wireless communication system applicable to an embodiment of this application. As shown in FIG. 1, the wireless communication system may include at least one terminal device, such as UE 1, UE 2, and UE 3 shown in FIG. 1. Optionally, the wireless communication system may further include at least one network device, for example, a network device shown in FIG. 1.

The network device and the terminal device may communicate with each other. For example, the network device and the terminal device may communicate with each other through a Uu interface, and a link (link) for communication between the network device and the terminal device may be denoted as a Uu link. As shown in FIG. 1(a), the network device and the UE 1 may directly communicate with each other. As shown in FIG. 1(b), the network device and the UE 1 may alternatively communicate with each other through the UE 2. Similarly, the network device and the UE 2 may directly communicate with each other, or the network device and the UE 2 may communicate with each other through the UE 1. It may be understood that, the Uu link represents a connection relationship between the terminal device and the network device, and is a logical concept rather than a physical entity. A main link is merely named for differentiation, and a specific name of the main link does not limit the protection scope of this application.

Terminal devices may also communicate with each other. For example, the terminal devices may directly communicate with each other. As shown in FIG. 1(a) to FIG. 1(c), the UE 1 and the UE 2 may directly communicate with each other. For another example, the terminal devices may communicate with each other through another device, for example, a network device or a terminal device. As shown in FIG. 1(a), the UE 1 and the UE 2 may communicate with each other through the network device. As shown in FIG. 1(d), the UE 1 and the UE 2 may communicate with each other through the UE 3. An interface for communication between the terminal devices may be denoted as a proximity-based services communication 5 (proximity-based services communication 5, PC5) interface, a link for communication between the terminal devices may be denoted as a sidelink (sidelink, SL), and communication between the terminal devices may also be denoted as SL communication. The sidelink may also be referred to as a side link, a secondary link, or the like. It may be understood that the sidelink represents a connection relationship between the terminal devices, and is a logical concept rather than a physical entity. The sidelink is merely named for differentiation, and a specific name of the sidelink does not limit the protection scope of this application.

In an example, SL communication between terminal devices may be used in an internet of vehicles or an intelligent transportation system (intelligent transportation system, ITS), for example, the V2X communication described above.

Optionally, SL communication between terminal devices may be performed in network coverage, or may be performed without network coverage. As shown in FIG. 1(a) and FIG. 1(b), the UE 1 and other UE may communicate with each other in network coverage. Alternatively, as shown in FIG. 1(c) and FIG. 1(d), the UE 1 and other UE may communicate with each other outside a network coverage area (out-of-coverage).

Optionally, configuration information used during SL communication between terminal devices, for example, a time-frequency resource used during the SL communication between the terminal devices, may be configured or scheduled by a network device, or may be autonomously selected by the terminal device. This is not limited.

It may be understood that FIG. 1 is merely a simplified diagram of an example for ease of understanding. The wireless communication system may further include another network device or may further include another terminal device, which is not shown in FIG. 1. Embodiments of this application are applicable to any communication scenario in which a transmitter device communicates with a receiver device.

For ease of understanding embodiments of this application, the following briefly describes several terms in this application.

1. Resource pool

SL communication may be performed based on a resource pool (resource pool). The resource pool refers to a time-frequency resource dedicated to SL communication; or the resource pool may be understood as a set of resources that can be used for SL communication, that is, a set of time domain resources and frequency domain resources used for SL communication.

A resource pool used for SL communication may be briefly referred to as a resource pool, or may be referred to as an SL resource pool. For brevity, the following uses the resource pool for description. The resource pool may also be referred to as a channel (channel), an operating channel (operating channel), a nominal channel (nominal channel bandwidth), or a bandwidth (bandwidth). In other words, the resource pool, the channel, and the bandwidth all represent a set of resources that can be used for SL communication. A name of the resource pool is not limited.

2. Resource

Data or information may be carried on a resource.

In time domain, a resource may include one or more time domain units (or may be referred to as time units). A time domain unit may be a symbol, a mini-slot (mini-slot), a slot (slot), a partial slot (partial slot), a subframe (subframe), a radio frame (frame), or the like.

In frequency domain, a resource may include one or more frequency domain units. A frequency domain unit may be a resource element (resource element, RE), a resource block (resource block, RB), a subchannel (subchannel), a resource pool (resource pool), a bandwidth (bandwidth), a bandwidth part (bandwidth part, BWP), a carrier (carrier), a channel (channel), an interlace (interlace) RB, or the like.

3. Physical sidelink feedback channel (physical sidelink feedback channel, PSFCH) resource

A PSFCH resource represents a resource for transmitting information carried on a PSFCH. For example, one PSFCH resource occupies two consecutive orthogonal frequency division multiplexing (orthogonal frequency division multiplexing, OFDM) symbols in time domain, and is one physical resource block (physical resource block, PRB) in frequency domain.

In a possible case, the PSFCH resource may be used to transmit feedback information. For example, for one physical sidelink shared channel (physical sidelink shared channel, PSSCH) transmission, if a transmitter uses control information to carry hybrid automatic repeat request acknowledgment (hybrid automatic repeat request acknowledgment, HARQ-ACK) feedback enabling information, a receiver may feed back acknowledgment (acknowledgment, ACK) or negative acknowledgment (negative acknowledgment, NACK) information based on a decoding result of data information carried on a PSSCH. The ACK or NACK information is transmitted through a PSFCH. PSFCH transmission means transmission performed through a PSFCH. Similarly, the PSSCH transmission described below means transmission performed through a PSSCH.

4. Identifier (identifier, ID) of a terminal device

An identifier of a terminal device is an identifier that indicates, identifies, or corresponds to a corresponding terminal device. For example, the terminal device may use an index or a number that uniquely identifies the terminal device. The identifier may be configured via signaling, preconfigured, or predefined. In an example, the identifier of the terminal device is any one of the following: a medium access control (medium access control, MAC) address, a subscriber identity module (subscriber identity module, SIM) card number, an international mobile equipment identity (international mobile equipment identity, IMEI), and the like of the terminal.

Optionally, the identifier of the terminal device may alternatively be an identifier that indicates, identifies, or corresponds to a corresponding terminal device during transmission. The identifier may be configured via signaling, preconfigured, or predefined. For example, the identifier is an IP address, a network temporary identifier (radio network temporary identifier, RNTI), a source identifier of a sending device, or a destination identifier of a receiving device. Optionally, the source identifier of the sending device may be an identifier associated with a specific to-be-sent service or message. Optionally, the destination identifier of the receiving device may be an identifier associated with a specific to-be-received service or message.

5. Subband non-overlapping full duplex (subband non-overlapping full duplex, SBFD) technology

In the SBFD technology, duplex enhancement is performed on a network device, to support more flexible uplink (uplink, UL) and downlink (downlink, DL) resource configuration in network deployment. The SBFD technology can improve uplink coverage and reduce a feedback delay of a hybrid automatic repeat request (hybrid automatic repeat request, HARQ), and is a very promising technology in uplink-dominant application scenarios such as a smart factory, smart mining, and smart steel.

In an application scenario such as SL to business (to business, 2B), for example, a plurality of sensors and actuators are mounted onto a programmable logic controller (programmable logic controller, PLC), and the PLC needs to receive data returned by the sensor and send an instruction message to the actuator in a very short time. Therefore, the SBFD technology is considered to be applied to SL communication. For example, the PLC has a capability of simultaneously performing receiving and sending on non-overlapping frequency domain resources at a same moment. In this way, a communication delay can be reduced, and a half-duplex problem during communication between devices can be resolved.

Different from time division duplex (time division duplex, TDD) and frequency division duplex (frequency division duplex, FDD), SBFD is more flexible in UL and DL resource division.

FIG. 2 is a diagram of SBFD, TDD, and FDD. As shown in FIG. 2, SBFD is more flexible in spectrum allocation. In a same time domain unit, for example, a same slot, an uplink resource and a downlink resource that do not overlap in frequency domain exist. In a same frequency domain unit, for example, a same subband, an uplink resource and a downlink resource that do not overlap in time domain exist. To reduce self-interference caused by simultaneous data receiving and data sending, in a possible implementation, a guard band (guard band, GB) is divided between an uplink resource and a downlink resource.

When the SBFD technology is applied to SL communication, to reduce self-interference caused when an SBFD device simultaneously receives data and sends data, in a possible implementation, a resource pool is divided into two subbands (subband) that do not overlap in frequency domain, and a system-level GB is designed between the subbands. The SBFD device may send data on one of the subbands, and receive data on the other subband.

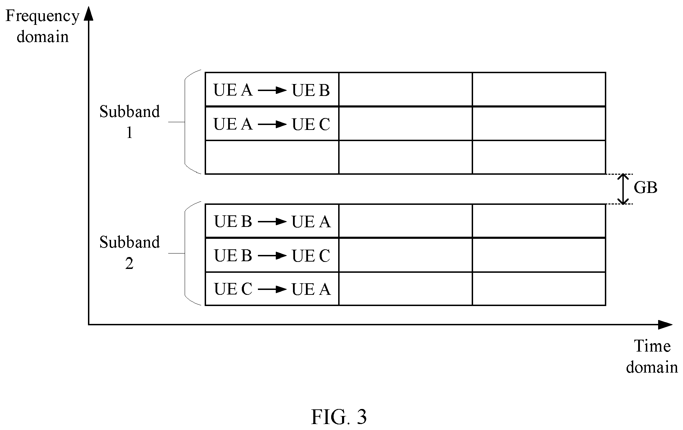

FIG. 3 is a diagram of dividing a resource pool into two subbands and a GB. As shown in FIG. 3, the resource pool is divided into a subband 1 and a subband 2 that do not overlap in frequency domain, and a GB is designed between the subband 1 and the subband 2. UE A is used as an example. The UE A selects the subband 1 as a sending subband and the subband 2 as a receiving subband. That is, the UE A sends data on the subband 1, and the UE A receives data on the subband 2.

The foregoing design may have a half-duplex problem. For example, when the UE A selects the subband 1 as a sending subband and the subband 2 as a receiving subband, and UE B selects the subband 2 as a sending subband and the subband 1 as a receiving subband, a half-duplex conflict may occur between UE C and the UE A or the UE B regardless of how the UE C configures a receiving subband and a sending subband of the UE C. FIG. 3 is used as an example. When the UE C uses the subband 1 as a receiving subband and the subband 2 as a sending subband, a half-duplex conflict exists between the UE B and the UE C.

In addition, division of the SL resource pool into the receiving subband, the sending subband, and the GB may reduce flexibility of resource selection of UE, and cause an unnecessary resource waste. For example, after the UE A selects a sending subband, the UE A selects sending data on the sending subband to send data, and peer UE communicating with the UE A, for example, denoted as the UE B, selects a sending resource on a receiving subband of the UE A to send data. In addition, for some devices, such as half-duplex TDD UE, a GB does not need to be obtained through division because there is no simultaneous receiving and sending. In addition, for an SBFD device, if the SBFD device does not have a service requirement for simultaneous receiving and sending at a specific moment, a GB does not need to be obtained through division for the device.

In view of this, this application provides a solution, to resolve the foregoing problem. Specifically, after SBFD is introduced into SL, a GB is dynamically configured through resource selection, to reduce self-interference caused when a terminal device simultaneously receives and sends data.

The foregoing briefly describes terms used in this application, and details are not described in the following embodiments. In addition, the foregoing descriptions of the terms are merely descriptions for ease of understanding, and do not limit the protection scope of embodiments of this application.

It may be understood that the term "and/or" in this specification is merely an association relationship of associated objects, and indicates that three relationships may exist. For example, A and/or B may indicate the following three cases: Only A exists, both A and B exist, and only B exists. In addition, the character "/" in this specification usually indicates an "or" relationship between the associated objects.

It may be further understood that, in this application, an "indication" may include a direct indication, an indirect indication, an explicit indication, or an implicit indication. When a piece of indication information is described as indicating A, it may be understood that the indication information carries A, directly indicates A, or indirectly indicates A.

In this application, information indicated by indication information is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The following describes in detail a method provided in embodiments of this application with reference to the accompanying drawings. Embodiments provided in this application may be applied to the network architecture shown in FIG. 1. This is not limited.

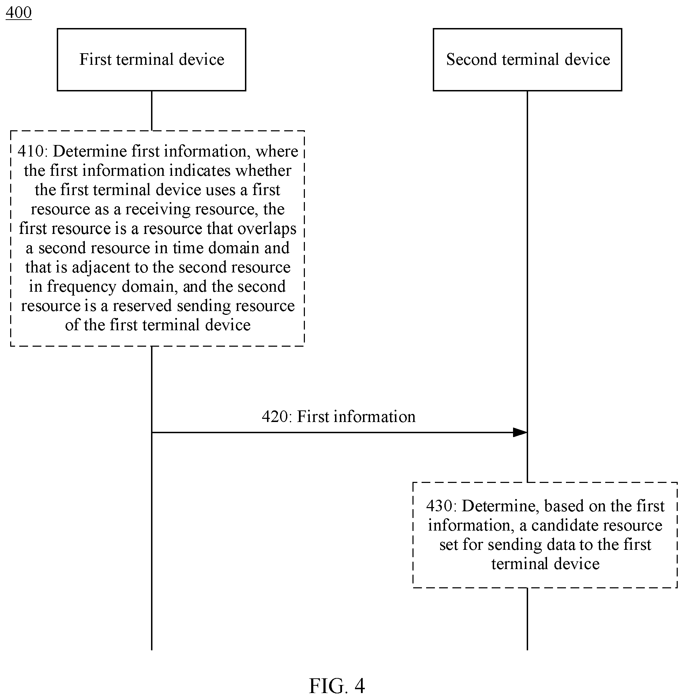

FIG. 4 is a diagram of a sidelink communication method 400 according to an embodiment of this application. For ease of description, the following mainly describes the method 400 by using interaction between a first terminal device and a second terminal device as an example. The method 400 may include the following steps.

Optionally, the method 400 includes step 410.

410: The first terminal device determines first information, where the first information indicates whether the first terminal device uses a first resource as a receiving resource, the first resource is a resource that overlaps a second resource in time domain and that is adjacent to the second resource in frequency domain, and the second resource is a reserved sending resource of the first terminal device.

The first terminal device is an SBFD device.

That the first information indicates whether the first terminal device uses the first resource as a receiving resource may be replaced with that the first information indicates whether the first terminal device recommends the first resource as a receiving resource.

In a possible case, the first information determined by the first terminal device indicates that the first terminal device uses the first resource as the receiving resource, that is, the first terminal device can receive data on the first resource.

In another possible case, the first information determined by the first terminal device indicates that the first terminal device does not use the first resource as the receiving resource, that is, the first terminal device does not receive data on the first resource.

In embodiments of this application, a receiving resource and a sending resource are mentioned a plurality of times. A sending resource of the first terminal device is used as an example. A resource used by the first terminal device to send data may be referred to as a sending resource, and a resource used by the first terminal device to receive data may be referred to as a receiving resource.

The second resource is a reserved sending resource of the first terminal device, that is, the second resource is a reserved resource, for example, a reserved resource scheduled by SCI. In other words, a reserved resource indicated by the SCI includes the second resource. The SCI may be, for example, first-order SCI. The first terminal device may send data on the reserved resource scheduled by the SCI. In other words, the second resource may also be understood as a reserved sending resource of the first terminal device.

The reserved resource may include a time domain resource and a frequency domain resource. For example, the reserved resource may be determined by the following parameters in the first-order SCI: a resource reservation period, frequency domain resource allocation, and time domain resource allocation. The resource reservation period, or referred to as a time domain offset, may indicate a time interval between a next data packet and a current data packet. The reserved resource is not limited in embodiments of this application.

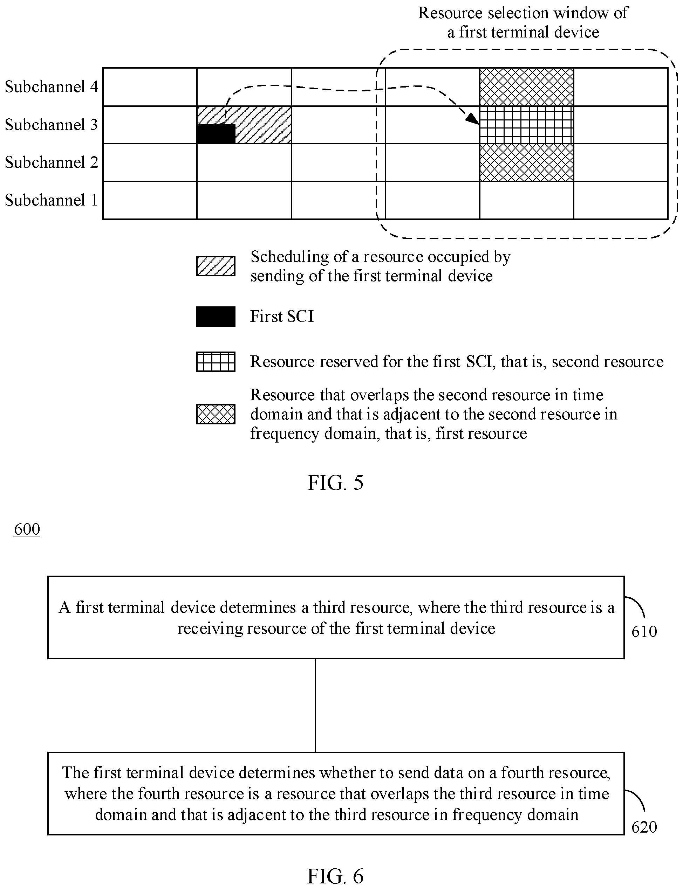

FIG. 5 is a diagram of receiving resource selection of a first terminal device applicable to an embodiment of this application. As shown in FIG. 5, the second resource is a reserved resource scheduled by SCI (denoted as first SCI for differentiation), and for example, includes a resource on a subchannel 3. The first resource is a resource that overlaps the second resource in time domain and that is adjacent to the second resource in frequency domain, and for example, includes resources that are on a subchannel 2 and a subchannel 4 and that overlap the second resource in time domain. If the first information indicates that the first terminal device does not use the first resource as the receiving resource, when sending data to the first terminal device, the second terminal device excludes, from a candidate resource set, a candidate resource that overlaps the second resource.

In embodiments of this application, overlapping is mentioned a plurality of times, for example, time domain overlapping or resource overlapping. It may be understood that overlapping may include complete overlapping, or may include partial overlapping. Time domain overlapping is used as an example. Time domain overlapping may include complete overlapping in time domain, or may include partial overlapping in time domain. Details are not described below.

420: The first terminal device sends the first information to the second terminal device. Correspondingly, the second terminal device receives the first information.

For example, the second terminal device may be an SBFD device, or may be another device. This is not limited.

In this embodiment of this application, the first terminal device may determine, based on an actual communication status, whether to use, as a receiving resource, a resource that overlaps the reserved sending resource of the first terminal device in time domain and that is adjacent to the reserved sending resource of the first terminal device in frequency domain, and provide an indication for another device. In this way, when sending data to the first terminal device, the another device may exclude a candidate resource based on the indication of the first terminal device. According to this application, not only resource selection can be implemented, but also self-interference caused when the terminal device simultaneously receives and sends data can be reduced. For example, when sending data by the first terminal device on the second resource causes relatively large interference to receiving data by the first terminal device on the first resource, the first terminal device may indicate, to another device, that the first resource is not used as the receiving resource, thereby reducing self-interference caused when the first terminal device simultaneously receives and sends data.

In addition, according to this application, the first terminal device determines, based on an actual communication status, whether to use, as a receiving resource, a resource that overlaps the reserved sending resource of the first terminal device in time domain and that is adjacent to the reserved sending resource of the first terminal device in frequency domain, so that a guard band between receiving and sending resources (for example, receiving and sending subbands) can be dynamically configured in a resource selection process, thereby improving flexibility of guard band configuration and reducing an unnecessary resource waste. For example, the resource that overlaps the reserved sending resource of the first terminal device in time domain and that is adjacent to the reserved sending resource of the first terminal device in frequency domain may be considered as a guard band. If the first terminal device determines, based on an actual communication status, not to use, as a receiving resource, the resource that overlaps the reserved sending resource of the first terminal device in time domain and that is adjacent to the reserved sending resource of the first terminal device in frequency domain, the receiving resource may be used as a guard band between the reserved sending resource and another resource. If the first terminal device determines, based on an actual communication status, to use, as a receiving resource, the resource that overlaps the reserved sending resource of the first terminal device in time domain and that is adjacent to the reserved sending resource of the first terminal device in frequency domain, it is equivalent that a guard band may not be configured between the reserved sending resource and the receiving resource. It can be learned that, according to embodiments of this application, a guard band between receiving and sending resources (for example, receiving and sending subbands) can be dynamically configured in a resource selection process.

Optionally, the first information is carried in SCI, and for differentiation, the SCI is denoted as SCI #1. For example, the SCI #1 may be first-order SCI, or may be second-order SCI, or may be newly defined SCI (for example, referred to as third-order SCI). This is not limited. The SCI #1 may be carried on a PSSCH or a physical sidelink control channel (physical sidelink control channel, PSCCH). This is not limited. For example, if the SCI #1 is second-order SCI (for example, second-order SCI in a new format), in an example, the first terminal device may further indicate, by using first-order SCI, that the current second-order SCI is newly defined second-order SCI, or the first terminal device may further indicate, by using first-order SCI, whether the current second-order SCI includes the first information.

In a possible implementation, the first information is implemented by using at least one bit. For example, it is assumed that one bit is used to indicate whether the first terminal device uses the first resource as the receiving resource. If the bit is set to "1", it indicates that the first terminal device uses the first resource as the receiving resource. If the bit is set to "0", it indicates that the first terminal device does not use the first resource as the receiving resource. It should be understood that the foregoing is merely an example for description, and is not limited.

In another possible implementation, the first information is a specific field. For example, the first information is carried in the SCI #1, and whether the SCI #1 includes a specific field is used to indicate whether the first terminal device uses the first resource as the receiving resource. For example, if the SCI #1 includes the specific field, it indicates that the first terminal device uses the first resource as the receiving resource; or if the SCI #1 does not include the specific field, it indicates that the first terminal device does not use the first resource as the receiving resource.

Optionally, the method 400 further includes step 430.

430: The second terminal device determines, based on the first information, a candidate resource set for sending data to the first terminal device.

In a possible case, the first information indicates that the first terminal device does not use the first resource as the receiving resource. In this case, when sending data to the first terminal device, the second terminal device may consider a recommendation of the first terminal device, that is, send the data to the first terminal device on a resource other than the first resource.

Specifically, if the first information indicates that the first terminal device does not use the first resource as the receiving resource, when the second terminal device needs to send data to the first terminal device, the second terminal device may determine, based on the first information, that the candidate resource set for sending data to the first terminal device does not include the first resource. In other words, the second terminal device excludes, from the candidate resource set, a candidate resource that overlaps the first resource. For example, when the second terminal device reserves a periodic resource, for example, the second terminal device reserves a periodic resource whose period is T1, if a candidate resource overlaps the first resource after being extended based on the period T1, the second terminal device further excludes the candidate resource. For another example, the second terminal device first determines the candidate resource set, and then excludes, from the candidate resource set, a candidate resource that overlaps the first resource, or a candidate resource that overlaps the first resource after being extended based on the period T1.

In another possible case, the first information indicates that the first terminal device uses the first resource as the receiving resource. In this case, when sending data to the first terminal device, the second terminal device may consider a recommendation of the first terminal device, that is, when sending data to the first terminal device, the second terminal device may not exclude the first resource.

Specifically, if the first information indicates that the first terminal device uses the first resource as the receiving resource, when the second terminal device needs to send data to the first terminal device, the second terminal device may determine, based on an actual situation, the candidate resource set for sending data to the first terminal device, that is, a candidate resource overlapping the first resource does not need to be excluded from the candidate resource set.

It may be understood that when the first information indicates that the first terminal device uses the first resource as the receiving resource, whether a resource used by the second terminal device to send data to the first terminal device includes the first resource may be determined based on an actual communication status. This is not limited in this embodiment of this application.

Optionally, the first terminal device indicates information about the second resource and/or information about the first resource to the second terminal device. In this way, the second terminal device may learn of the second resource and a position of the second resource. For example, the information about the second resource and/or the information about the first resource are/is carried in SCI. For differentiation, the SCI is denoted as SCI #2. For example, the SCI #2 may be first-order SCI, or may be second-order SCI, or may be newly defined SCI (for example, referred to as third-order SCI). This is not limited.

The SCI #2 and the SCI #1 may be the same, that is, the first information, and the information about the second resource and/or the information about the first resource are carried in same SCI; or the SCI #2 and the SCI #1 may be different, that is, the first information, and the information about the second resource and/or the information about the first resource are carried in different SCI.

In an example, the first terminal device sends the SCI #2 to the second terminal device, where the SCI #2 includes the information about the second resource. In this way, the second terminal device may learn of the position of the second resource based on the SCI #2, and then may learn, based on the position of the second resource, of a position of a resource that overlaps the second resource in time domain and that is adjacent to the second resource in frequency domain (that is, a position of the first resource).

In another example, the first terminal device sends the SCI #2 to the second terminal device, where the SCI #2 includes the information about the first resource. In this way, the second terminal device may directly learn of a position of the first resource based on the SCI #2.

In another example, the first terminal device sends the SCI #2 to the second terminal device, where the SCI #2 includes the information about the first resource and the information about the second resource. In this way, the second terminal device may directly learn of positions of the first resource and the second resource based on the SCI #2.

The foregoing is an example for description, and is not limited. For example, the first resource may alternatively be implicitly indicated by using the first information. For example, the second resource is indicated by using the following parameters in first-order SCI: frequency domain resource allocation, time domain resource allocation, and a resource reservation period indication. The first resource is jointly indicated by the foregoing parameters and the first information. For example, if the first information indicates that the first terminal device does not use the second resource as a receiving resource, the second resource is a resource that overlaps the first resource in time domain and that is adjacent to the first resource in frequency domain. In other words, a resource that is not used as a receiving resource and that is indicated by the first information is a resource that overlaps the first resource in time domain and that is adjacent to the first resource in frequency domain.

Optionally, that the first terminal device determines the first information includes: The first terminal device determines the first information based on any one of the following: first power and second power.

   (1) The first power represents transmit power of the first terminal device on the second resource.

For example, the first terminal device may estimate or calculate the transmit power of the first terminal device on the second resource.

For example, the transmit power of the first terminal device on the second resource may be determined based on one or more of a path loss corresponding to the first terminal device, a priority of first data, or a path loss corresponding to a third terminal device. The first data is data sent by the first terminal device on the second resource, the third terminal device is a receiving device of the first data, the path loss corresponding to the first terminal device is, for example, a path loss between the first terminal device and an access network device, and the path loss corresponding to the third terminal device is, for example, a path loss between the first terminal device and the third terminal device. For example, if the first data is unicast data, the first power may be determined based on the path loss corresponding to the third terminal device and/or the priority of the first data. For another example, if the first data is multicast data or broadcast data, the first power may be determined based on the path loss corresponding to the first terminal device and/or the priority of the first data.

For another example, the transmit power of the first terminal device on the second resource may be power at which the first terminal device sends a signal (for example, a reference signal or a data signal) on the second resource. For example, the first power may be average power or a sum of power of the reference signal in all frequency domain units. For another example, the first power may be average power or a sum of power of the data signal in all frequency domain units. For another example, the first power may be average power or a sum of power of the data signal and the reference signal in all frequency domain units.

In a possible implementation, when the first power is greater than a first threshold, the first information determined by the first terminal device indicates that the first terminal device does not use the first resource as the receiving resource; or when the first power is less than the first threshold, the first information determined by the first terminal device indicates that the first terminal device uses the first resource as the receiving resource. The first threshold is preconfigured, for example, preconfigured by a higher layer of the first terminal device, or may be estimated based on a historical situation, or may be predefined. This is not limited. When the first power is equal to the first threshold, the first information determined by the first terminal device may indicate that the first terminal device does not use the first resource as the receiving resource, or the first information determined by the first terminal device may indicate that the first terminal device uses the first resource as the receiving resource, or there may be another function. This is not limited.

(2) The second power represents residual self-interference power of the first terminal device on the first resource.

For example, the first terminal device may estimate or calculate the residual self-interference power of the first terminal device on the first resource. For example, the first terminal device chooses to send a signal, including a reference signal and/or a data signal, on a subchannel at the first power, and no other terminal device sends a signal on an adjacent subchannel of the subchannel. The first terminal device measures receive power on the adjacent subchannel of the subchannel, and the receive power is the second power.

For example, the first terminal device may estimate the second power based on transmit power of the first terminal device on the first resource. Generally, higher transmit power of the first terminal device on the first resource indicates higher residual self-interference power (that is, the second power) of the first terminal device on the first resource.

For another example, the first terminal device may calculate the second power based on transmit power of the first terminal device on the first resource and a relationship that the transmit power and the second power satisfy. For example, it is assumed that the transmit power is P1, the residual self-interference power is P2, and $P2=f(P1)$. Therefore, the first terminal device may determine the residual self-interference power (that is, the second power) of the first terminal device on the first resource based on the transmit power on the first resource and the foregoing relationship. For example, the first terminal device may determine the second power based on the transmit power on the first resource and a ratio of the first power to the second power. A relationship between P1 and P2 may be preconfigured by a higher layer of the first terminal device, or may be estimated based on a historical situation, or may be predefined. This is not limited.

For example, the first terminal device may determine the second power based on the transmit power on the first resource and the ratio of the first power to the second power. For ease of description below, the ratio of the first power to the second power is denoted as $\alpha$.

A value of $\alpha$ is preconfigured, for example, preconfigured by a higher layer of the first terminal device, or may be predefined.

In an example, P2 satisfies formula 1.

$$P2 = P1 - \alpha$$

Formula 1

P1 represents the first power, units of P1 and P2 are decibel milliwatt (decibel relative to one milliwatt, dBm), and a unit of $\alpha$ is decibel (decibel, dB). Formula 1 is used as an example, and a unit of X is dBm.

In a possible implementation, when the second power is greater than a second threshold, the first information determined by the first terminal device indicates that the first terminal device does not use the first resource as the receiving resource; or when the second power is less than the second threshold, the first information determined by the first terminal device indicates that the first terminal device uses the first resource as the receiving resource. The second threshold is preconfigured, for example, preconfigured by a higher layer of the first terminal device, or may be estimated based on a historical situation, or may be predefined. This is not limited. When the second power is equal to the second threshold, the first information determined by the first terminal device may indicate that the first terminal device does not use the first resource as the receiving resource, or the first information determined by the first terminal device may indicate that the first terminal device uses the first resource as the receiving resource, or there may be another function. This is not limited.

The first power and the second power are separately described above. It may be understood that the first terminal device may alternatively determine the first information based on the first power and the second power. For example, when the first power is greater than the first threshold and the second power is greater than the second threshold, the first information determined by the first terminal device indicates that the first terminal device does not use the first resource as the receiving resource; otherwise, the first information determined by the first terminal device indicates that the first terminal device uses the first resource as the receiving resource. For another example, when the first power is less than the first threshold and the second power is less than the second threshold, the first information determined by the first terminal device indicates that the first terminal device uses the first resource as the receiving resource; otherwise, the first information determined by the first terminal device indicates that the first terminal device does not use the first resource as the receiving resource.

Optionally, the first terminal device sends second information to the second terminal device, where the second information indicates an identifier of the first terminal device. Correspondingly, the second terminal device receives the second information.

For example, the second information is carried in SCI. For differentiation, the SCI is denoted as SCI #3. For example, the SCI #3 may be first-order SCI, or may be second-order SCI, or may be newly defined SCI (for example, referred to as third-order SCI). This is not limited.

The SCI #3 and the SCI #1 may be the same, that is, the first information and the second information are carried in same SCI; or the SCI #3 and the SCI #1 may be different, that is, the first information and the second information are carried in different SCI.

In step 430, that the second terminal device determines, based on the first information, the candidate resource set for sending data to the first terminal device includes: The second terminal device determines, based on the first information and the second information, the candidate resource set for sending data to the first terminal device.

For example, after the second terminal device receives the first information and the second information, if the first information indicates that the first terminal device does not use the first resource as the receiving resource, and the second information indicates the identifier of the first terminal device, when the second terminal device sends data to the first terminal device, the second terminal device does not send the data to the first terminal device by using the first resource. When sending data to a terminal device other than the first terminal device, the second terminal device may include the first resource in a candidate resource set for sending data to the another terminal device, and the second terminal device finally determines a sending resource. The sending resource may be the first resource, or may not be the first resource. This is not limited.

In a possible implementation, the second information is the identifier of the first terminal device, that is, the first terminal device may directly indicate the identifier of the first terminal device.

In an example, the second information is, for example, a source identifier in the SCI #3 (for example, second-order SCI). Based on this example, for example, when the first terminal device and the second terminal device establish communication, the first terminal device and the second terminal device exchange a set of source identifiers associated with the first terminal device. The set of source identifiers includes at least one source identifier, and the at least one source identifier may be an identifier associated with a specific to-be-sent service or message. In this manner, the second terminal device may determine, by determining whether the source identifier in the SCI #3 (for example, second-order SCI) is in the set of source identifiers associated with the first terminal device, whether a sending device is the first terminal device.

In another example, the second information is a device identifier of the first terminal device, for example, a new field introduced in the SCI #3 (for example, second-order SCI or third-order SCI). The field indicates the device identifier of the first terminal device. Based on this example, for example, when the first terminal device and the second terminal device establish communication, the first terminal device and the second terminal device exchange the device identifier. In this manner, the second terminal device may determine, by determining the device identifier in the SCI #3 (for example, second-order SCI or third-order SCI), whether a sending device is the first terminal device.

In another possible implementation, the second information is other information, and the identifier of the first terminal device may be indirectly learned of based on the other information.

For a possible form of the identifier of the first terminal device, refer to the description of the foregoing term part. Details are not described herein again.

FIG. 6 is a diagram of a sidelink communication method 600 according to another embodiment of this application. Solutions of the method 600 and the method 400 may be used in combination, or may be used separately. This is not limited. For ease of description, the following mainly describes the method 600 by using a first terminal device as an example. The method 600 may include the following steps.

610: The first terminal device determines a third resource, where the third resource is a receiving resource of the first terminal device.

In a possible implementation, the first terminal device receives SCI (denoted as SCI #4 for differentiation), and the SCI #4 indicates the third resource. For example, the SCI #4 may be first-order SCI, or may be second-order SCI, or may be newly defined SCI (for example, referred to as third-order SCI). This is not limited.

620: The first terminal device determines whether to send data on a fourth resource, where the fourth resource is a resource that overlaps the third resource in time domain and that is adjacent to the third resource in frequency domain.

That the first terminal device determines whether to send the data on the fourth resource may be replaced with that the first terminal device determines whether the fourth resource is used as a sending resource of the first terminal device.

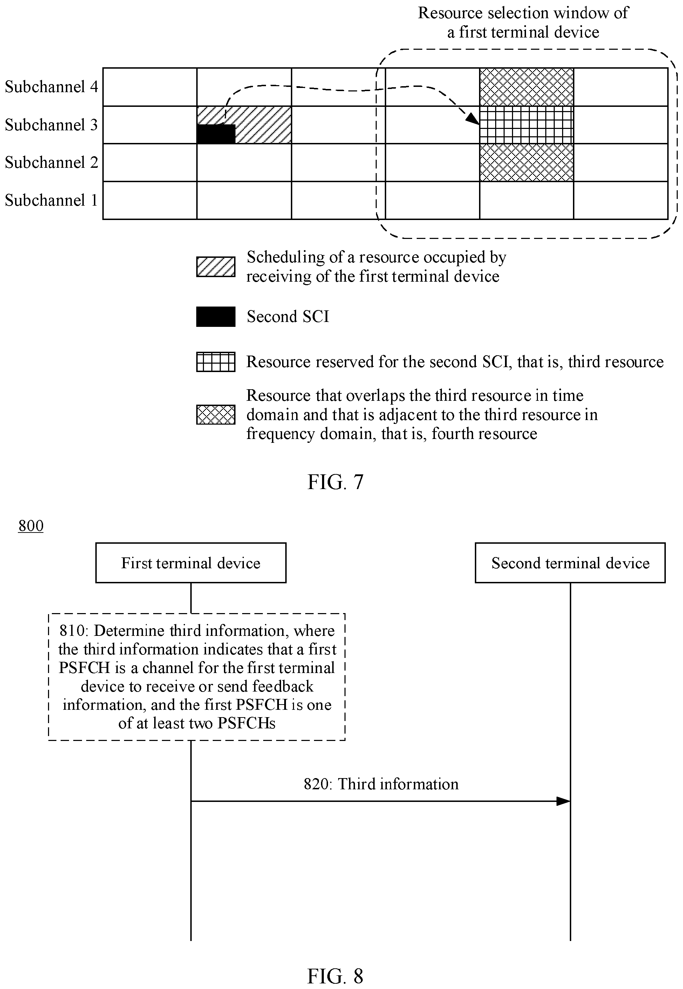

FIG. 7 is a diagram of sending resource selection of a first terminal device applicable to an embodiment of this application. As shown in FIG. 7, the fourth resource is a reserved resource scheduled by SCI (denoted as second SCI for differentiation), and for example, includes a resource on a subchannel 3. The fourth resource is a resource that overlaps the third resource in time domain and that is adjacent to the third resource in frequency domain, and for example, includes resources that are on a subchannel 2 and a subchannel 4 and that overlap the third resource in time domain. If the first terminal device determines not to send the data on the fourth resource, when sending the data, the first terminal device excludes, from a candidate resource set, a candidate resource that overlaps the fourth resource.

Optionally, that the first terminal device determines whether to send the data on the fourth resource includes: The first terminal device determines, based on at least one of the following: third power and fourth power, whether to send the data on the fourth resource.

(1) The third power is transmit power of the first terminal device on the fourth resource. The third power is similar to the first power in the method 400. For the third power, refer to the description of the first power in the method 400. This is not limited herein.

In a possible implementation, when the third power is greater than a third threshold, the first terminal device determines not to send the data on the fourth resource; or when the third power is less than the third threshold, the first terminal device determines to send the data on the fourth resource. The third threshold is preconfigured, for example, preconfigured by a higher layer of the first terminal device, or may be estimated based on a historical situation, or may be predefined. This is not limited. When the third power is equal to the third threshold, the first terminal device may determine not to send the data on the fourth resource, or the first terminal device may determine to send the data on the fourth resource, or there may be another function. This is not limited.

(2) The fourth power is residual self-interference power of the first terminal device on the third resource. The fourth power is similar to the second power in the method 400. For the fourth power, refer to the description of the second power in the method 400. This is not limited herein.

In a possible implementation, when the fourth power is greater than a fourth threshold, the first terminal device determines not to send the data on the fourth resource; or when the fourth power is less than the fourth threshold, the first terminal device determines to send the data on the fourth resource. The fourth threshold is preconfigured, for example, preconfigured by a higher layer of the first terminal device, or may be estimated based on a historical situation, or may be predefined. This is not limited. When the fourth power is equal to the fourth threshold, the first terminal device may determine not to send the data on the fourth resource, or the first terminal device may determine to send the data on the fourth resource, or there may be another function. This is not limited.

The third power and the fourth power are separately described above. It may be understood that the first terminal device may alternatively determine, based on the third power and the fourth power, whether to send the data on the fourth resource. For example, when the third power is greater than the third threshold and the fourth power is greater than the fourth threshold, the first terminal device determines not to send the data on the fourth resource; otherwise, the first terminal device determines to send the data on the fourth resource. For another example, when the third power is less than the third threshold and the fourth power is less than the fourth threshold, the first terminal device determines to send the data on the fourth resource; otherwise, the first terminal device determines not to send the data on the fourth resource.

FIG. 8 is a diagram of a sidelink communication method 800 according to another embodiment of this application. For ease of description, the following mainly describes the method 800 by using a first terminal device as an example. The method 800 may include the following steps.

Optionally, the method 800 includes step 810.

810: The first terminal device determines third information, where the third information indicates that a first PSFCH is a channel for the first terminal device to receive or send feedback information, and the first PSFCH is one of at least two PSFCHs.

The first terminal device is an SBFD device.

The feedback information may indicate a receiving condition of data, or may indicate a receiving status of data, that is, indicate whether the data is successfully received. The feedback information may be, for example, a HARQ feedback. For example, if a terminal device successfully receives and successfully decodes data, feedback information sent by the terminal device is an acknowledgment, for example, an ACK; or if a terminal device does not receive data and/or fails to decode the data, feedback information sent by the terminal device is a negative acknowledgment, for example, a NACK.

In this embodiment of this application, a PSFCH channel is divided into at least two PSFCHs (or at least two groups) in frequency domain. In this way, the first terminal device may choose to send feedback information and receive feedback information on different PSFCHs. For example, the first terminal device sends feedback information on one PSFCH, and receives feedback information on another PSFCH.

Optionally, a GB may be further designed. For example, a GB is designed between two adjacent PSFCHs. For example, the PSFCH channel is divided into three parts in frequency domain: a first PSFCH, a second PSFCH, and a GB.

Optionally, each of the at least two PSFCHs includes a plurality of frequency domain units in frequency domain. For example, quantities of frequency domain units included in all of the at least two PSFCHs in frequency domain may be the same or may be different. This is not limited.

Optionally, resources occupied by all of the at least two PSFCHs overlap in time domain, and are separated by at least one frequency domain unit in frequency domain. In this way, frequency domain resources occupied by the first terminal device to send feedback information and receive feedback information are not adjacent, so that interference caused by sending the feedback information and receiving the feedback information by the first terminal device can be reduced.

For ease of description, the following mainly uses two PSFCHs, for example, denoted as a first PSFCH and a second PSFCH, as an example for description. That is, the PSFCH channel is divided into the first PSFCH and the second PSFCH in frequency domain, where the first PSFCH and the second PSFCH each are mapped to a PSSCH in an entire resource pool.

For example, a quantity of frequency domain units (for example, PRBs) occupied by the first PSFCH is M1, and each resource scheduling unit corresponds to $M_{set,1}$ frequency domain units in the first PSFCH. For example, $M_{set,1}=M1/(X*L)$. A quantity of frequency domain units (for example, PRBs) occupied by the second PSFCH is M2, and each resource scheduling unit corresponds to $M_{set,1}$ frequency domain units in the second PSFCH. For example, $M_{set,2}=M2/(X*L)$. X is a PSFCH period, and L is a maximum quantity of subchannels configured for the resource pool.

That the third information indicates that the first PSFCH is a channel for the first terminal device to receive or send feedback information includes the following several implementations.

In a first possible implementation, the third information indicates that the first PSFCH is a channel for the first terminal device to receive feedback information, that is, the first terminal device receives the feedback information from another device on the first PSFCH. For example, the first terminal device sends data to another device, and the another device determines, based on the third information, to send feedback information for the data to the first terminal device on the first PSFCH. Correspondingly, the first terminal device receives the feedback information for the data on the first PSFCH.

Based on the first possible implementation, the second PSFCH (that is, a PSFCH other than the first PSFCH) may be considered by default as a channel for the first terminal device to send feedback information. In other words, the first terminal device sends the feedback information to another device on the second PSFCH. For example, after receiving data from another device, the first terminal device sends feedback information for the data to the another device on the second PSFCH. Correspondingly, the another device determines, based on the third information, to receive the feedback information for the data on the second PSFCH.

In a second possible implementation, the third information indicates that the first PSFCH is a channel for the first terminal device to send feedback information, that is, the first terminal device sends the feedback information to another device on the first PSFCH. For example, after receiving data from another device, the first terminal device sends feedback information for the data to the another device on the first PSFCH. Correspondingly, the another device determines, based on the third information, to receive the feedback information for the data on the first PSFCH.

Based on the second possible implementation, the second PSFCH (that is, a PSFCH other than the first PSFCH) may be considered by default as a channel for the first terminal device to receive feedback information. In other words, the first terminal device receives the feedback information from another device on the second PSFCH. For example, the first terminal device sends data to another device, and the another device determines, based on the third information, to send feedback information for the data to the first terminal device on the second PSFCH. Correspondingly, the first terminal device receives the feedback information for the data on the second PSFCH.

It may be understood that the foregoing two implementations are examples for description. This is not limited herein. For example, the third information indicates that the first PSFCH is a channel for the first terminal device to send feedback information, and the second PSFCH is a channel for the first terminal device to receive feedback information. In other words, the first terminal device sends feedback information to another device on the first PSFCH, and receives feedback information from the another device on the second PSFCH.

820: The first terminal device sends the third information.

In step 820, the first terminal device may send the third information to the at least one terminal device. For example, the first terminal device sends the third information to a second terminal device. In this way, the at least one terminal device may receive feedback information and send feedback information on corresponding PSFCHs based on an indication of the third information.

Optionally, the third information is carried in SCI (denoted as SCI #5 for differentiation). Further, optionally, the feedback information is used to feed back a receiving status of data scheduled by the SCI #5. For example, the SCI #5 may be first-order SCI, or may be second-order SCI, or may be newly defined SCI (for example, referred to as third-order SCI). This is not limited.

For example, the first terminal device sends the SCI #5, and the SCI #5 includes the third information. In this case, the third information indicates that the first PSFCH is a channel for the first terminal device to receive feedback information for the data scheduled by the SCI #5. In other words, when the first terminal device sends, to another device, the data scheduled by the SCI #5, the another device sends the feedback information for the data on the first PSFCH.

For another example, the first terminal device sends the SCI #5, and the SCI #5 includes the third information. In this case, the third information indicates that the first PSFCH is a channel for the first terminal device to send feedback information for the data scheduled by the SCI #5. In other words, when the first terminal device receives, from another device, the data scheduled by the SCI #5, the first terminal device sends the feedback information for the data on the first PSFCH.

Optionally, the method 800 further includes: The first terminal device obtains fourth information, where the fourth information indicates information about a resource occupied by at least one of the at least two PSFCHs. For example, the fourth information is configuration information of a resource pool. That the first terminal device obtains the fourth information may be replaced with: The first terminal device receives the fourth information, for example, the first terminal device receives the fourth information from a network device; or the first terminal device determines the fourth information, for example, the first terminal device determines or reads the fourth information.

Further, optionally, the information about the resource occupied by the at least one of the at least two PSFCHs includes at least one of the following: a quantity of frequency domain units occupied by the at least one PSFCH, a start position of a frequency domain resource occupied by the at least one PSFCH, and an end position of the frequency domain resource occupied by the at least one PSFCH.

In a possible implementation, the fourth information indicates information about a resource occupied by each of the at least two PSFCHs. For example, the fourth information indicates at least one of the following: a quantity of frequency domain units occupied by each PSFCH, a start position of a frequency domain resource occupied by each PSFCH, and an end position of the frequency domain resource occupied by each PSFCH. Based on this implementation, the first terminal device may learn, based on the information about the resource occupied by each PSFCH, of the resource occupied by the PSFCH.

In another possible implementation, the fourth information indicates information about resources occupied by some of the at least two PSFCHs. For example, the fourth information indicates at least one of the following: a quantity of frequency domain units occupied by the first PSFCH, a start position of a frequency domain resource occupied by the first PSFCH, and an end position of the frequency domain resource occupied by the first PSFCH. Based on this implementation, the first terminal device may directly learn, based on the fourth information, of the resource occupied by the first PSFCH. Further, the first terminal device may learn, based on the resource occupied by the first PSFCH, of a resource occupied by another PSFCH. For example, the resource occupied by each of the at least two PSFCHs satisfies a specific condition. The condition may be predefined or preconfigured. Therefore, the first terminal device may learn, based on a resource occupied by a PSFCH, of a resource occupied by another PSFCH.

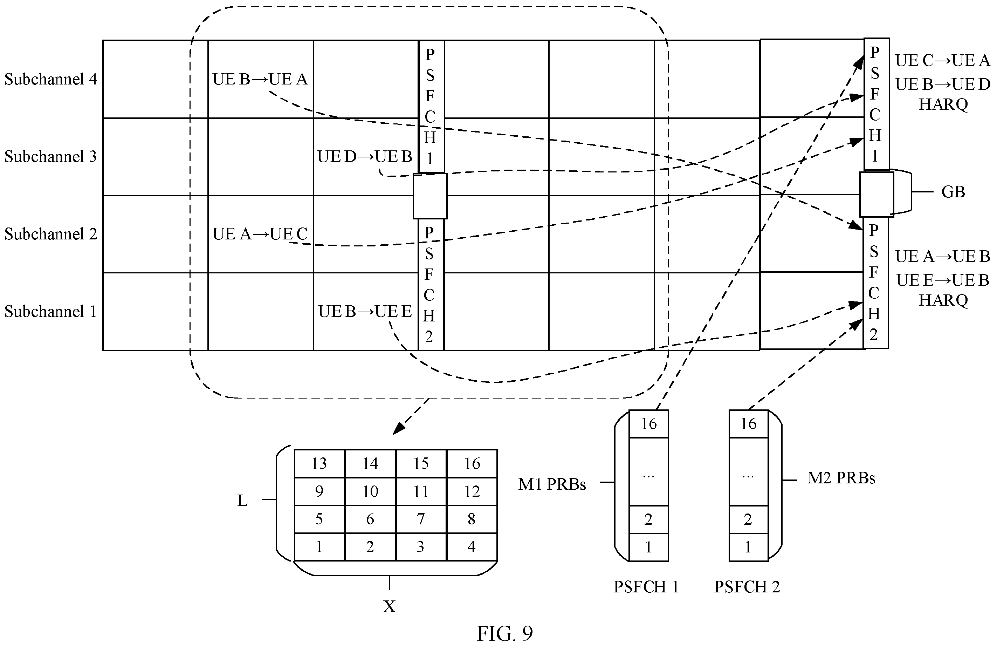

FIG. 9 is a diagram of mapping from a PSSCH to a PSFCH applicable to an embodiment of this application. As shown in FIG. 9, it is assumed that UE A, UE B, and UE C are SBFD devices, and UE D and UE E are other devices such as TDD devices. As shown in FIG. 9, it is assumed that a PSFCH channel is divided into a PSFCH 1, a PSFCH 2, and a GB in frequency domain. The PSFCH 1 and the PSFCH 2 each are mapped to a PSSCH in an entire resource pool. A quantity of PRBs occupied by the PSFCH 1 is M1, and each resource scheduling unit corresponds to $M_{set,1}$ frequency domain units in the PSFCH 1. For example, $M_{set,1}=M1/(X*L)$. A quantity of PRBs occupied by the PSFCH 2 is M2, and each resource scheduling unit corresponds to $M_{set,2}$ frequency domain units in the PSFCH 2. For example, $M_{set,2}=M2/(X*L)$. X is a PSFCH period, and L is a maximum quantity of subchannels configured for the resource pool.

In a first possible case, when SBFD devices communicate with each other, the SBFD devices may exchange respective PSFCHs for receiving and/or sending feedback information. For example, an SBFD device that sends data indicates, in SCI that schedules the data, that a PSFCH channel is a PSFCH channel for the SBFD device to receive a HARQ. For another example, an SBFD device that receives data uses, as a PSFCH channel for the SBFD device to send a HARQ, a PSFCH channel indicated by SCI that schedules the data.

As shown in FIG. 9, the UE B and the UE A are used as an example. It is assumed that a PSFCH for the UE A to send feedback information is the PSFCH 2, and a PSFCH for the UE A to receive feedback information is the PSFCH 1. For example, after the UE B sends data to the UE A, the UE A sends a HARQ of the data to the UE B on the PSFCH 2. Correspondingly, the UE B detects the HARQ from the UE A on the PSFCH 2. After the UE A sends data to the UE C, the UE C sends a HARQ of the data to the UE A on the PSFCH 1. Correspondingly, the UE A detects the HARQ from the UE C on the PSFCH 1.

In a second possible case, when an SBFD device and a TDD device communicate with each other, the SBFD device may indicate a PSFCH for the SBFD device to receive and/or send feedback information, and the TDD device receives feedback information on the PSFCH indicated by the SBFD device for sending feedback information, and sends feedback information on the PSFCH indicated by the SBFD device for receiving feedback information.

As shown in FIG. 9, the UE B and the UE D are used as an example. It is assumed that a PSFCH for the UE B to send feedback information is the PSFCH 1. For example, after the UE D sends data to the UE B, the UE B sends a HARQ to the UE D on the PSFCH 1. Correspondingly, the UE D detects the HARQ from the UE B on the PSFCH 1.

It may be understood that, when the TDD device sends data to the SBFD device for the first time, the TDD device may jointly detect, on the PSFCH 1 and the PSFCH 2, a HARQ fed back by the SBFD device; or if the TDD device learns in advance a PSFCH for the SBFD device to receive and/or send a HARQ, the TDD device may detect, on the corresponding PSFCH, a HARQ fed back by the SBFD device.

In a third possible case, when TDD devices communicate with each other, the TDD devices may exchange respective PSFCHs for receiving and/or sending feedback information, or a PSFCH for the TDD device to receive and/or send feedback information is preconfigured. A PSFCH for the TDD device to send feedback information may be the same as or different from a PSFCH for the TDD device to receive feedback information. This is not limited.

FIG. 9 is an example for description, and is not limited.

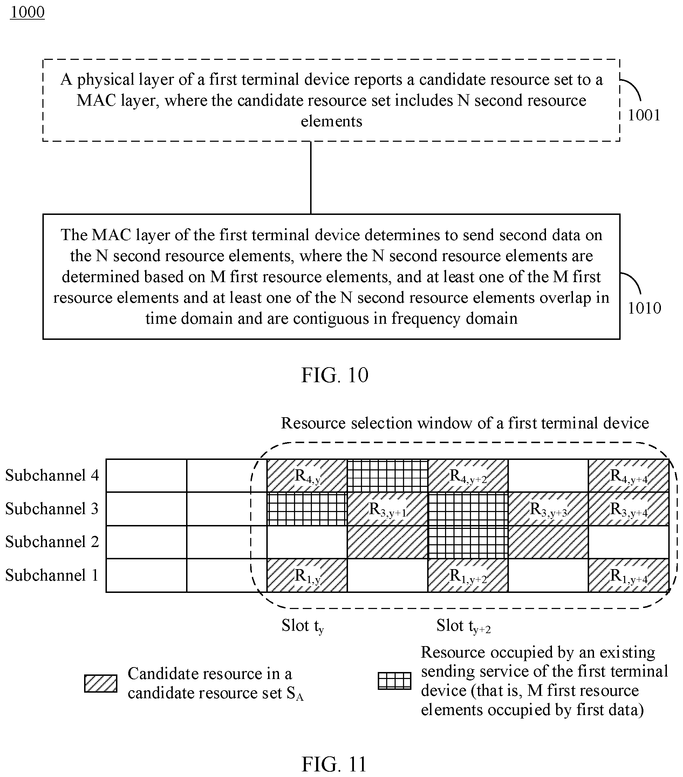

FIG. 10 is a diagram of a sidelink communication method 1000 according to another embodiment of this application. For ease of description, the following mainly describes the method 1000 by using a first terminal device as an example. The method 1000 may include the following steps.

1010: A MAC layer of the first terminal device determines N second resource elements for sending second data, where the N second resource elements are determined based on M first resource elements, and at least one of the M first resource elements and at least one of the N second resource elements overlap in time domain and are contiguous in frequency domain.

M and N are integers greater than 1 or equal to 1.

The M first resource elements are resource elements for the first terminal device to send first data. Optionally, before step 1010, the method 1000 further includes: The first terminal device determines to send the first data on the M first resource elements.

The first terminal device is an SBFD device.

For example, the first data and the second data may be data of different services, or the first data and the second data may be different data of a same service. This is not limited.

Optionally, before step 1010, the method 1000 further includes step 1001.

1001: A physical layer of the first terminal device reports a candidate resource set to the MAC layer, where the candidate resource set includes the N second resource elements.

That is, in step 1010, the MAC layer of the first terminal device determines to send the first data on the M first resource elements and send the second data on the N second resource elements.

In this embodiment of this application, when the SBFD device has a plurality of pieces of to-be-sent data, the MAC layer selects, from the candidate resource set reported by the physical layer, sending resources that are contiguous in frequency domain for the plurality of pieces of to-be-sent data, to minimize a resource waste caused by GB configuration.

The following describes two possible implementations.

In a first possible implementation, the N second resource elements are N resource elements whose values are within a preset range in $I_{x,y}$, N is an integer greater than 1 or equal to 1, $I_{x,y}$ is a sum of a first quantity and a second quantity in a slot set associated with $R_{x,y}$, the first quantity is a quantity of time domain elements that are contiguous in frequency domain and that are of a resource occupied by the first data in a first time domain unit and an extension resource of $R_{x,y}$ in the first time domain unit, and the second quantity is a quantity of time domain units in which the first terminal device does not transmit data in the slot set associated with $R_{x,y}$. $R_{x,y}$ represents a candidate resource (or referred to as a single-slot candidate resource) in the candidate resource set, x represents a sequence of time domain units, and y represents a sequence of frequency domain units. It may be understood that, in this embodiment of this application, the first time domain unit represents a time domain resource corresponding to a resource selection window in which the candidate resource set is located. If there are at least two time domain resources corresponding to the resource selection window in which the candidate resource set is located, the first time domain unit may also be replaced with a first time domain unit set, that is, the first time domain unit set represents a time domain resource set corresponding to the resource selection window in which the candidate resource set is located.

The following describes the foregoing implementation in detail with reference to several steps.

Step (1): A higher layer selects a candidate resource $R_{x,y}$ from a candidate resource set $S_A$ for a current sending service.

A sequence number of a slot to which $R_{x,y}$ belongs is $t_y$, and a start sequence number occupied by a subchannel is x.

Step (2): Assuming that a resource reservation period is $P_{rsvp}$, the higher layer selects the candidate resource $R_{x,y}$ and a period extension resource $\left\{ R_{x,y+j\times P_{rsvp}} \right\}_{j=1,...,C_{resel}-1}$ for the current service.

$C_{resel}$ is a quantity of slots corresponding to a transmission opportunity of the current service.

It may be understood that, if the current service is an aperiodic service, $P_{rsvp}=0$; or if the current service is an aperiodic service, $P_{rsvp}$ is an integer greater than 0.

Step (3): For the candidate resource $R_{x,y}$ in the candidate resource set $S_A$, define $I_{x,y}$ as a quantity of slots in which there is an existing sending service and a resource occupied by the existing sending service in the slot and an extension resource of $R_{x,y}$ in the slot are contiguous in frequency domain in the slot set $\left\{ t_{y+j\times P_{rsvp}} \right\}_{j=0,...,C_{resel}-1}$ associated with $R_{x,y}$ plus a quantity of slots without transmission of the existing sending service.

FIG. 11 is a diagram of determining a sending resource by a higher layer applicable to an embodiment of this application. As shown in FIG. 11, it is assumed that a resource reservation period of a current service is $P_{rsvp}=2$, and $C_{resel}=3$. $R_{4,y}$ is used as an example. A candidate slot set associated with $R_{4,y}$ is $\{t_y, t_{y+2}, t_{y+4}\}$, and a period extension corresponding to $R_{4,y}$ in the slot set is $\{R_{4,y}, R_{4,y+2}, R_{4,y+4}\}$, where $R_{4,y}$ and a resource occupied by the existing service are contiguous, and no existing service is transmitted in a slot $t_{y+4}$. Therefore, $I_{x,y}=1+1=2$.

Step (4): Sort $I_{x,y}$ in descending order, and select $R_{x,y}$ with an earliest slot in $R_{x,y}$ corresponding to first N $I_{x,y}$ as an initial transmission resource, and $R_{x,y}$ corresponding to N-1 remaining $I_{x,y}$ as a retransmission resource.

N is an integer greater than 1 or equal to 1. A specific value of N may be predefined or preconfigured, and is not limited.

The example shown in FIG. 11 is used as an example. All candidate resources in the candidate resource set $S_A$ are traversed, and a value of $I_{x,y}$ corresponding to $R_{x,y}$ may be obtained, as shown in Table 1. Assuming that N=2, the MAC layer may select $R_{4,y}$ as an initial transmission resource, and may randomly select a resource from $R_{1,y}$, $R_{3,y+1}$, $R_{1,y+2}$, and $R_{4,y+2}$ as a retransmission resource.

Table 1

| $R_{x,y}$ | Value of $I_{x,y}$ corresponding to $R_{x,y}$ |
|---|---|
| **$R_{1,y}$** | **2** |
| **$R_{4,y}$** | **3** |
| $R_{2,y+1}$ | 1 |
| **$R_{3,y+1}$** | **2** |

(continued)

| $R_{x,y}$ | Value of $I_{x,y}$ corresponding to $R_{x,y}$ |
|---|---|
| **$R_{1,y+2}$** | **2** |
| **$R_{4,y+2}$** | **2** |
| $R_{2,y+3}$ | 1 |
| $R_{3,y+3}$ | 1 |
| $R_{1,y+4}$ | 1 |
| $R_{3,y+4}$ | 1 |
| $R_{4,y+4}$ | 1 |

Based on the foregoing first possible implementation, when the SBFD device has a plurality of sending services, the MAC layer selects, from the candidate resource set reported by the physical layer, sending resources that are contiguous in frequency domain for the plurality of sending services, to minimize a resource waste caused by GB configuration.

In a second possible implementation, the N second resource elements are N resource elements whose values are within a preset range in $I_{x,y}$, N is an integer greater than 1 or equal to 1, $I_{x,y}$ is a quantity of time domain units in which a proportion of available resources other than a third resource is greater than or equal to a preset value in a slot set associated with $R_{x,y}$, and the third resource includes: a resource occupied by data, $R_{x,y}$, an extension resource of $R_{x,y}$, a resource adjacent to the resource occupied by the data in frequency domain, a resource adjacent to $R_{x,y}$ in frequency domain, and a resource adjacent to the extension resource of $R_{x,y}$ in frequency domain. $R_{x,y}$ represents a candidate resource (or referred to as a single-slot candidate resource) in the candidate resource set, x represents a sequence of time domain units, and y represents a sequence of frequency domain units.

The following describes the foregoing implementation in detail with reference to several steps.

Step (1): A higher layer selects a candidate resource $R_{x,y}$ from a candidate resource set $S_A$ for a current sending service.

Step (2): Assuming that a resource reservation period is $P_{rsvp}$, the higher layer selects the candidate resource $R_{x,y}$ and a period extension resource $\left\{ R_{x,y+j \times P_{rsvp}} \right\}_{j=1,...,C_{resel}-1}$ for the current service.

For descriptions of step (1) and step (2), refer to the descriptions in the first possible implementation. Details are not described herein again.

Step (3): For the candidate resource $R_{x,y}$ in the candidate resource set $S_A$, define $I_{x,y}$ as a quantity of slots in which a proportion of available receiving resources other than a resource occupied by an existing sending service, $R_{x,y}$, a period extension resource $\left\{ R_{x,y+j \times P_{rsvp}} \right\}_{j=1,...,C_{resel}-1}$, and adjacent subchannels of the foregoing resources is greater than a threshold in the slot set $\left\{ t_{y+j \times P_{rsvp}} \right\}_{j=0,...,C_{resel}-1}$ associated with $R_{x,y}$.

For example, a proportion of available receiving resources in a slot may be defined as a proportion of a quantity of remaining subchannels in a total quantity of subchannels configured for a resource pool after subchannels occupied by all sending services and adjacent subchannels of the subchannels are excluded in the slot.

FIG. 11 is still used as an example. As shown in FIG. 11, it is assumed that a resource reservation period of a current service is $P_{rsvp}=2$, $C_{resel}=3$, and a proportion threshold of remaining available receiving resources configured by a higher layer is 20%. $R_{4,y}$ is used as an example. A candidate slot set associated with $R_{4,y}$ is $\{t_y, t_{y+2}, t_{y+4}\}$, and a period extension corresponding to $R_{4,y}$ in the slot set is $\{R_{4,y}, R_{4,y+2}, R_{4,y+4}\}$, where in the slot $t_y$, after $R_{4,y}$, a resource ($R_{3,y}$) occupied by transmission of an existing service, and an adjacent subchannel ($R_{2,y}$) of the foregoing resource are excluded, a proportion of remaining available receiving resources ($R_{1,y}$) in a total quantity of subchannels is 1/4=25%. Similarly, a proportion of remaining available receiving resources in a slot $t_{y+2}$ in the total quantity of subchannels is 0%. A proportion of remaining available receiving resources ($R_{2,y+4}$, $R_{1,y+4}$) in a slot $t_{y+4}$ in the total quantity of subchannels is 50%. Therefore, $R_{1,y}$ corresponds to $I_{1,y}=1+0+1=2$.

Step (4): Sort $I_{x,y}$ in descending order, and select $R_{x,y}$ with an earliest slot in $R_{x,y}$ corresponding to first N $I_{x,y}$ as an initial transmission resource, and $R_{x,y}$ corresponding to N-1 remaining $I_{x,y}$ as a retransmission resource.

N is an integer greater than 1 or equal to 1. A specific value of N may be predefined or preconfigured, and is not limited.

The example shown in FIG. 11 is used as an example. All candidate resources in the candidate resource set $S_A$ are traversed, and a value of $I_{x,y}$ corresponding to $R_{x,y}$ may be obtained, as shown in Table 2. Assuming that N=2, the MAC layer may select $R_{4,y}$ as an initial transmission resource, and $R_{3,y+1}$ as a retransmission resource.

Table 2

| $R_{x,y}$ | Value of $I_{x,y}$ corresponding to $R_{x,y}$ |
|---|---|
| $R_{1,y}$ | 1 |
| **$R_{4,y}$** | **2** |
| $R_{2,y+1}$ | 1 |
| **$R_{3,y+1}$** | 2 |
| $R_{1,y+2}$ | 1 |
| $R_{4,y+2}$ | 1 |
| $R_{2,y+3}$ | 1 |
| $R_{3,y+3}$ | 1 |
| $R_{1,y+4}$ | 1 |
| $R_{3,y+4}$ | 1 |
| $R_{4,y+4}$ | 1 |

Based on the foregoing second possible implementation, when the SBFD device has a plurality of sending services, the MAC layer selects, from the candidate resource set reported by the physical layer, sending resources that are contiguous in frequency domain for the plurality of sending services, to ensure, as much as possible, that a slot in which the sending service is performed has sufficient available receiving resources.

It may be understood that the foregoing two implementations are examples for description. This is not limited herein. Any solution in which the MAC layer can select sending resources that are contiguous in frequency domain for the plurality of sending services from the candidate resource set reported by the physical layer is applicable to embodiments of this application.

It may be understood that, in some of the foregoing embodiments, "transmission" is mentioned. Unless otherwise specified, "transmission" includes receiving and/or sending. For example, transmitting a signal may include receiving a signal and/or sending a signal.

It may be further understood that, in some of the foregoing embodiments, "include" and "carried in" are mentioned a plurality of times. It may be understood that they represent a same meaning. For example, that the first information is carried in the sidelink control information may be replaced with that the sidelink control information includes the first information.

It may be further understood that, in embodiments of this application, 1st-order SCI and first-order SCI are sometimes alternately used, and represent a same meaning. For example, the 1st-order SCI and the first-order SCI may represent SCI that is sent on an earlier symbol in a slot and that is carried on a PSCCH. For another example, the 1st-order SCI and the first-order SCI may alternatively represent SCI that is sent on a later symbol in a slot and that may be sent on a PSCCH or may be sent through multiplexing on a PSSCH.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that, in the foregoing method embodiments, the method and the operation implemented by the communication device may also be implemented by a component (for example, a chip or a circuit) of the communication device.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

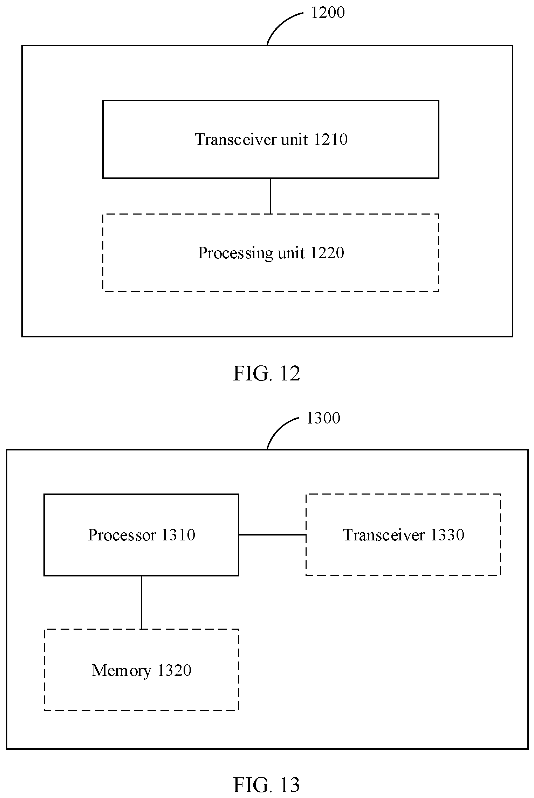

FIG. 12 is a block diagram of a communication apparatus 1200 according to an embodiment of this application.

The apparatus 1200 includes a transceiver unit 1210. The transceiver unit 1210 may be configured to implement a corresponding communication function. The transceiver unit 1210 may also be referred to as a communication interface or a communication unit.

Optionally, the apparatus 1200 further includes a processing unit 1220. The processing unit 1220 may be configured to process data.

Optionally, the apparatus 1200 further includes a storage unit. The storage unit may be configured to store instructions and/or data. The processing unit 1220 may read the instructions and/or the data in the storage unit, so that the apparatus implements actions of the terminal device in the foregoing method embodiments.

In a design, the apparatus 1200 may be the first terminal device in the foregoing embodiments, or may be a component (for example, a chip) of the first terminal device. The apparatus 1200 may implement steps or procedures performed by the first terminal device in the foregoing method embodiments. The transceiver unit 1210 may be configured to perform receiving/sending-related operations of the first terminal device in the foregoing method embodiments. The processing unit 1220 may be configured to perform processing-related operations of the first terminal device in the foregoing method embodiments.

In a possible implementation, the transceiver unit 1210 is configured to send first information to a second terminal device, where the first information indicates whether the first terminal device uses a first resource as a receiving resource, the first resource is a resource that overlaps a second resource in time domain and that is adjacent to the second resource in frequency domain, the second resource is a reserved sending resource of the first terminal device, and the first terminal device is a subband non-overlapping full duplex device.

The apparatus 1200 may implement the steps or the procedures performed by the first terminal device in the method embodiments according to embodiments of this application. The apparatus 1200 may include units configured to perform the method performed by the first terminal device in the embodiment shown in FIG. 4 or FIG. 6.

In another possible implementation, the transceiver unit 1210 is configured to send third information to a second terminal device, where the third information indicates that a first physical sidelink feedback channel PSFCH is a channel for the first terminal device to receive or send feedback information, the first PSFCH is one of at least two PSFCHs, and the first terminal device is a subband non-overlapping full duplex device. The third information indicates that the first PSFCH is a channel for the first terminal device to receive feedback information, and the first terminal device receives the feedback information on the first PSFCH; or the third information indicates that the first PSFCH is a channel for the first terminal device to send feedback information, and the first terminal device sends the feedback information on the first PSFCH.

The apparatus 1200 may implement the steps or the procedures performed by the first terminal device in the method embodiments according to embodiments of this application. The apparatus 1200 may include units configured to perform the method performed by the first terminal device in the embodiment shown in FIG. 8.

In another design, the apparatus 1200 may be the second terminal device in the foregoing embodiments, or may be a component (for example, a chip) of the second terminal device. The apparatus 1200 may implement steps or procedures performed by the second terminal device in the foregoing method embodiments. The transceiver unit 1210 may be configured to perform receiving/sending-related operations of the second terminal device in the foregoing method embodiments. The processing unit 1220 may be configured to perform processing-related operations of the second terminal device in the foregoing method embodiments.

In a possible implementation, the transceiver unit 1210 is configured to receive first information from a first terminal device, where the first information indicates whether the first terminal device uses a first resource as a receiving resource, the first resource is a resource that overlaps a second resource in time domain and that is adjacent to the second resource in frequency domain, the second resource is a reserved sending resource of the first terminal device, and the first terminal device is a subband non-overlapping full duplex device; and the processing unit 1220 is configured to determine, based on the first information, a candidate resource set for sending data to the first terminal device.

The apparatus 1200 may implement the steps or the procedures performed by the second terminal device in the method embodiments according to embodiments of this application. The apparatus 1200 may include units configured to perform the method performed by the second terminal device in the embodiment shown in FIG. 4 or FIG. 6.

In another possible implementation, the transceiver unit 1210 is configured to receive third information from a first terminal device, where the third information indicates that a first physical sidelink feedback channel PSFCH is a channel for the first terminal device to receive or send feedback information, the first PSFCH is one of at least two PSFCHs, and the first terminal device is a subband non-overlapping full duplex device. The third information indicates that the first PSFCH is a channel for the first terminal device to receive feedback information, and the second terminal device sends the feedback information to the first terminal device on the first PSFCH; or the third information indicates that the first PSFCH is a channel for the first terminal device to send feedback information, and the second terminal device monitors the feedback information from the first terminal device on the first PSFCH.

The apparatus 1200 may implement the steps or the procedures performed by the second terminal device in the method embodiments according to embodiments of this application. The apparatus 1200 may include units configured to perform the method performed by the second terminal device in the embodiment shown in FIG. 8.

For more detailed descriptions of the apparatus 1200, directly refer to the related descriptions in the foregoing method embodiments. Details are not described herein again.

It should be understood that a specific process in which the units perform the foregoing corresponding steps is described in detail in the foregoing method embodiments. For brevity, details are not described herein.

It should be understood that the apparatus 1200 herein is embodied in a form of a functional unit. The term "unit" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. In an optional example, a person skilled in the art may understand that the apparatus 1200 may be specifically the terminal device (for example, the first terminal device or the second terminal device) in the foregoing embodiments, and may be configured to perform procedures and/or steps corresponding to the terminal device in the foregoing method embodiments. To avoid repetition, details are not described herein again.

The apparatus 1200 in the foregoing solutions has a function of implementing corresponding steps performed by the terminal device (for example, the first terminal device or the second terminal device) in the foregoing methods. The function may be implemented by using hardware, or may be implemented by using hardware executing corresponding software. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and related processing operations in the method embodiments.

In addition, the transceiver unit 1210 may alternatively be a transceiver circuit (for example, the transceiver circuit may include a receiver circuit and a transmitter circuit), and the processing unit may be a processing circuit.

It should be noted that the apparatus in FIG. 12 may be the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

FIG. 13 is a block diagram of a communication apparatus 1300 according to an embodiment of this application. The apparatus 1300 includes a processor 1310, and the processor 1310 is coupled to a memory 1320. Optionally, the apparatus further includes the memory 1320, configured to store a computer program or instructions and/or data. The processor 1310 is configured to execute the computer program or the instructions stored in the memory 1320, or read the data stored in the memory 1320, to perform the methods in the foregoing method embodiments.

Optionally, there are one or more processors 1310.

Optionally, there are one or more memories 1320.

Optionally, the memory 1320 and the processor 1310 are integrated together, or are disposed separately.

Optionally, as shown in FIG. 13, the apparatus 1300 further includes a transceiver 1330. The transceiver 1330 is configured to receive a signal and/or send a signal. For example, the processor 1310 is configured to control the transceiver 1330 to receive a signal and/or send a signal.

In a solution, the apparatus 1300 is configured to implement operations performed by the terminal device in the foregoing method embodiments.

For example, the processor 1310 is configured to execute the computer program or the instructions stored in the memory 1320, to implement related operations of the first terminal device or the second terminal device in the foregoing method embodiments.

In an implementation process, steps of the foregoing method may be completed by using an integrated logic circuit of hardware in the processor 1310 or instructions in a form of software. The method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 1320. The processor 1310 reads information in the memory 1320, and completes the steps of the foregoing methods in combination with hardware of the processor. To avoid repetition, details are not described herein again.

It should be understood that, in embodiments of this application, the processor may be one or more integrated circuits, and is configured to execute a related program, to perform the method embodiments of this application.

The processor (for example, the processor 1310) may include one or more processors and be implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gating logic, transistor logic, a discrete hardware circuit, a processing circuit or other appropriate hardware or firmware, and/or a combination of hardware and software, and is configured to perform various functions described in this disclosure. The processor may be a general-purpose processor or a dedicated processor. For example, the processor 1310 may be a baseband processor or a central processing unit. The baseband processor may be configured to process a communication protocol and communication data. The central processing unit may be configured to enable the apparatus to execute a software program and process data in the software program. In addition, a part of the processor may further include a non-volatile random access memory. For example, the processor may further store information of a device type.

The program in this application represents software in a broad sense. A non-limitative example of the software includes program code, a program, a subprogram, instructions, an instruction set, code, a code segment, a software module, an application program, a software application program, or the like. The program may be run in a processor and/or a computer, to enable the apparatus to perform various functions and/or processes described in this application.

The memory (for example, the memory 1320) may store data required by the processor (for example, the processor 1310) during software execution. The memory may be implemented by using any suitable storage technology. For example, the memory may be any available storage medium that can be accessed by a processor and/or a computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM) and a direct rambus random access memory (direct rambus RAM, DR RAM), a removable medium, an optical disk memory, a magnetic disk storage medium, a magnetic storage device, a flash memory, a register, a state memory, a remote mount memory, a local or remote memory component, or any other medium capable of carrying or storing software, data, or information and accessible by a processor/computer. It should be noted that the memory described in this specification aims to include but is not limited to these memories and any memory of another appropriate type.

The memory (for example, the memory 1320) and the processor (for example, the processor 1310) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (for example, the integrated circuit may be disposed in UE or another network node).

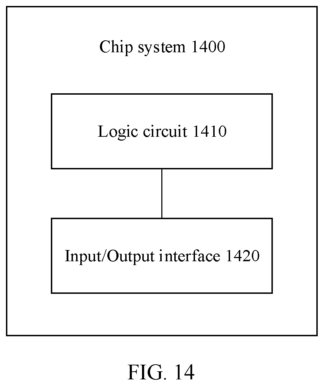

FIG. 14 is a block diagram of a chip system 1400 according to an embodiment of this application. The chip system 1400 (or may be referred to as a processing system) includes a logic circuit 1410 and an input/output interface (input/output interface) 1420.

The logic circuit 1410 may be a processing circuit in the chip system 1400. The logic circuit 1410 may be coupled to a storage unit, and invoke instructions in the storage unit, so that the chip system 1400 can implement the methods and functions in embodiments of this application. The input/output interface 1420 may be an input/output circuit in the chip system 1400, and outputs information processed by the chip system 1400, or inputs to-be-processed data or signaling information to the chip system 1400 for processing.

In a solution, the chip system 1400 is configured to implement operations performed by the terminal device in the foregoing method embodiments.

For example, the logic circuit 1410 is configured to implement a processing-related operation performed by the first terminal device in the foregoing method embodiments, for example, a processing-related operation performed by the first terminal device in the embodiment shown in FIG. 4, a processing-related operation performed by the first terminal device in the embodiment shown in FIG. 6, a processing-related operation performed by the first terminal device in the embodiment shown in FIG. 8, or a processing-related operation performed by the first terminal device in the embodiment shown in FIG. 10. The input/output interface 1420 is configured to implement a sending-related operation and/or a receiving-related operation performed by the first terminal device in the foregoing method embodiments, for example, a sending-related operation and/or a receiving-related operation performed by the first terminal device in the embodiment shown in FIG. 4, a sending-related operation and/or a receiving-related operation performed by the first terminal device in the embodiment shown in FIG. 6, a sending-related operation and/or a receiving-related operation performed by the first terminal device in the embodiment shown in FIG. 8, or a sending-related operation and/or a receiving-related operation performed by the first terminal device in the embodiment shown in FIG. 10.

For another example, the logic circuit 1410 is configured to implement a processing-related operation performed by the second terminal device in the foregoing method embodiments, for example, a processing-related operation performed by the second terminal device in the embodiment shown in FIG. 4, a processing-related operation performed by the second terminal device in the embodiment shown in FIG. 6, a processing-related operation performed by the second terminal device in the embodiment shown in FIG. 8, or a processing-related operation performed by the second terminal device in the embodiment shown in FIG. 10. The input/output interface 1420 is configured to implement a sending-related operation and/or a receiving-related operation performed by the second terminal device in the foregoing method embodiments, for example, a sending-related operation and/or a receiving-related operation performed by the second terminal device in the embodiment shown in FIG. 4, a sending-related operation and/or a receiving-related operation performed by the second terminal device in the embodiment shown in FIG. 6, a sending-related operation and/or a receiving-related operation performed by the second terminal device in the embodiment shown in FIG. 8, or a sending-related operation and/or a receiving-related operation performed by the second terminal device in the embodiment shown in FIG. 10.

An embodiment of this application further provides a computer-readable storage medium. The computer-readable storage medium stores computer instructions used to implement the method performed by the terminal device (for example, the first terminal device or the second terminal device) in the foregoing method embodiments.

An embodiment of this application further provides a computer program product, including instructions. When the instructions are executed by a computer, the method performed by the terminal device (for example, the first terminal device or the second terminal device) in the foregoing method embodiments is implemented.

An embodiment of this application further provides a communication system. The communication system includes the first terminal device and the second terminal device in the foregoing embodiments.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division. **In** actual implementation, there may be another division manner. For example, a plurality of units or components may be combined or integrated into another system, or some features may be ignored or not performed. **In** addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the solutions provided in this application.

**In** addition, functional units in embodiments of this application may be integrated into one unit, or each unit may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

When software is used to implement the functions, all or some of the functions may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1.  A sidelink communication method, comprising:
    sending, by a first terminal device, first information to a second terminal device, wherein the first information indicates whether the first terminal device uses a first resource as a receiving resource, the first resource is a resource that overlaps a second resource in time domain and that is adjacent to the second resource in frequency domain, the second resource is a reserved sending resource of the first terminal device, and the first terminal device is a subband non-overlapping full duplex device.

2. The method according to claim 1, wherein the first information is carried in sidelink control information.

3. The method according to claim 2, wherein the sidelink control information is carried on a physical sidelink control channel or a physical sidelink shared channel.

4. The method according to claim 2 or 3, wherein the sidelink control information further indicates the second resource.

5. The method according to any one of claims 1 to 4, wherein the method further comprises:
sending, by the first terminal device, second information to the second terminal device, wherein the second information indicates an identifier of the first terminal device.

6. The method according to any one of claims 1 to 5, wherein before the sending, by a first terminal device, first information to a second terminal device, the method further comprises:
determining, by the first terminal device, the first information.

7. The method according to claim 6, wherein the determining, by the first terminal device, the first information comprises:

determining, by the first terminal device, the first information based on at least one of the following: first power and second power, wherein
the first power is transmit power of the first terminal device on the second resource, and the second power is residual self-interference power of the first terminal device on the first resource.

8. The method according to claim 7, wherein the determining, by the first terminal device, the first information based on at least one of the following: first power and second power comprises:

when the first power is greater than a first threshold, the first information determined by the first terminal device indicates that the first terminal device does not use the first resource as the receiving resource; or when the first power is less than or equal to the first threshold, the first information determined by the first terminal device indicates that the first terminal device uses the first resource as the receiving resource; or
when the second power is greater than a second threshold, the first information determined by the first terminal device indicates that the first terminal device does not use the first resource as the receiving resource; or when the second power is less than or equal to the second threshold, the first information determined by the first terminal device indicates that the first terminal device uses the first resource as the receiving resource.

9. The method according to any one of claims 1 to 8, wherein the method further comprises:

determining, by the first terminal device, a third resource, wherein the third resource is a receiving resource of the first terminal device; and
determining, by the first terminal device, whether to send data on a fourth resource, wherein the fourth resource is a resource that overlaps the third resource in time domain and that is adjacent to the third resource in frequency domain.

10. The method according to claim 9, wherein the determining, by the first terminal device, whether to send data on a fourth resource comprises:

determining, by the first terminal device based on at least one of the following: third power and fourth power, whether to send the data on the fourth resource, wherein
the third power is transmit power of the first terminal device on the fourth resource, and the fourth power is residual self-interference power of the first terminal device on the third resource.

11. The method according to claim 10, wherein the determining, by the first terminal device based on at least one of the following: third power and fourth power, whether to send the data on the fourth resource comprises:

when the third power is greater than a third threshold, determining, by the first terminal device, not to send the data on the fourth resource; or when the third power is less than or equal to the third threshold, determining, by the first terminal device, to send the data on the fourth resource; or
when the fourth power is greater than a fourth threshold, determining, by the first terminal device, not to send the data on the fourth resource; or when the fourth power is less than or equal to the fourth threshold, determining, by the first terminal device, to send the data on the fourth resource.

12. A sidelink communication method, comprising:

receiving, by a second terminal device, first information from a first terminal device, wherein the first information indicates whether the first terminal device uses a first resource as a receiving resource, the first resource is a resource that overlaps a second resource in time domain and that is adjacent to the second resource in frequency domain, the second resource is a reserved sending resource of the first terminal device, and the first terminal device is a subband non-overlapping full duplex device; and
determining, by the second terminal device based on the first information, a candidate resource set for sending data to the first terminal device.

13. The method according to claim 12, wherein when the first information indicates that the first terminal device does not use the first resource as the receiving resource, the candidate resource set for sending data to the first terminal device does not comprise the first resource.

14. The method according to claim 12 or 13, wherein the method further comprises:

receiving, by the second terminal device, second information from the first terminal device, wherein the second information indicates an identifier of the first terminal device; and
the determining, by the second terminal device based on the first information, a candidate resource set for sending data to the first terminal device comprises:
determining, by the second terminal device based on the first information and the second information, the candidate resource set for sending data to the first terminal device.

15. A sidelink communication method, comprising:

sending, by a first terminal device, third information to a second terminal device, wherein the third information indicates that a first physical sidelink feedback channel PSFCH is a channel for the first terminal device to receive or send feedback information, the first PSFCH is one of at least two PSFCHs, and the first terminal device is a subband non-overlapping full duplex device, wherein
the third information indicates that the first PSFCH is a channel for the first terminal device to receive feedback information, and the first terminal device receives the feedback information on the first PSFCH; or the third information indicates that the first PSFCH is a channel for the first terminal device to send feedback information, and the first terminal device sends the feedback information on the first PSFCH.

16. The method according to claim 15, wherein the third information is carried in sidelink control information, and the feedback information is used to feed back a receiving status of data scheduled by the sidelink control information.

17. The method according to claim 15 or 16, wherein each of the at least two PSFCHs comprises a plurality of frequency domain units in frequency domain, and resources occupied by all of the at least two PSFCHs overlap in time domain, and are separated by at least one frequency domain unit in frequency domain.

18. The method according to any one of claims 15 to 17, wherein the method further comprises:
obtaining, by the first terminal device, fourth information, wherein the fourth information indicates information about a resource occupied by at least one of the at least two PSFCHs.

19. The method according to claim 18, wherein the information about the resource occupied by the at least one of the at least two PSFCHs comprises at least one of the following: a quantity of frequency domain units occupied by the at least one PSFCH, a start position of a frequency domain resource occupied by the at least one PSFCH, and an end position of the frequency domain resource occupied by the at least one PSFCH.

20. The method according to any one of claims 15 to 19, wherein the at least two PSFCHs further comprise a second PSFCH; and

the third information indicates that the first PSFCH is a channel for the first terminal device to receive feedback information, and the second PSFCH is a channel for the first terminal device to send feedback information; or the third information indicates that the first PSFCH is a channel for the first terminal device to send feedback information, and the second PSFCH is a channel for the first terminal device to receive feedback information.

21. A sidelink communication method, comprising:

receiving, by a second terminal device, third information from a first terminal device, wherein the third information indicates that a first physical sidelink feedback channel PSFCH is a channel for the first terminal device to receive or send feedback information, the first PSFCH is one of at least two PSFCHs, and the first terminal device is a subband non-overlapping full duplex device, wherein
the third information indicates that the first PSFCH is a channel for the first terminal device to receive feedback information, and the second terminal device sends the feedback information to the first terminal device on the first PSFCH; or the third information indicates that the first PSFCH is a channel for the first terminal device to send feedback information, and the second terminal device monitors the feedback information from the first terminal device on the first PSFCH.

22. The method according to claim 21, wherein the third information is carried in sidelink control information, and the feedback information is used to feed back a receiving status of data scheduled by the sidelink control information.

23. The method according to claim 21 or 22, wherein each of the at least two PSFCHs comprises a plurality of frequency domain units in frequency domain, and resources occupied by all of the at least two PSFCHs overlap in time domain, and are separated by at least one frequency domain unit in frequency domain.

24. The method according to any one of claims 21 to 23, wherein the method further comprises:
obtaining, by the second terminal device, fourth information, wherein the fourth information indicates information about a resource occupied by at least one of the at least two PSFCHs.

25. The method according to claim 24, wherein the information about the resource occupied by the at least one of the at least two PSFCHs comprises at least one of the following: a quantity of frequency domain units occupied by the at least one PSFCH, a start position of a frequency domain resource occupied by the at least one PSFCH, and an end position of the frequency domain resource occupied by the at least one PSFCH.

26. The method according to any one of claims 21 to 25, wherein the at least two PSFCHs further comprise a second PSFCH; and

the third information indicates that the first PSFCH is a channel for the first terminal device to receive feedback information, and the second PSFCH is a channel for the first terminal device to send feedback information; or the third information indicates that the first PSFCH is a channel for the first terminal device to send feedback information, and the second PSFCH is a channel for the first terminal device to receive feedback information.

27. A communication apparatus, comprising a module or a unit configured to perform the method according to any one of claims 1 to 26.

28. A communication apparatus, comprising a processor, wherein the processor is configured to execute a computer program or instructions stored in a memory, to enable the apparatus to perform the method according to any one of claims 1 to 26.

29. The apparatus according to claim 28, wherein the apparatus further comprises the memory and/or a communication interface, and the communication interface is coupled to the processor; and
the communication interface is configured to input and/or output information.

30. The apparatus according to any one of claims 27 to 29, wherein the apparatus is any one of the following: a chip, a chip system, or a circuit.

31. A computer-readable storage medium, wherein the computer-readable storage medium stores a computer program or instructions, and when the computer program or the instructions are run on a communication apparatus, the communication apparatus is enabled to perform the method according to any one of claims 1 to 26.

32. A computer program product, wherein the computer program product comprises a computer program or instructions for performing the method according to any one of claims 1 to 26.

33. A communication system, comprising a first terminal device and a second terminal device, wherein

the first terminal device is configured to perform the method according to any one of claims 1 to **11,** and the second terminal device is configured to perform the method according to any one of claims 12 to 14; or
the first terminal device is configured to perform the method according to any one of claims 15 to 20, and the second terminal device is configured to perform the method according to any one of claims 21 to 26.

FIG. 1

FIG. 2

FIG. 3

400

```
┌──────────────────────┐                    ┌──────────────────────┐
│  First terminal device │                    │ Second terminal device │
└──────────┬───────────┘                    └───────────┬──────────┘
           │                                            │
 ┌─ ─ ─ ─ ─┴─ ─ ─ ─ ─ ─ ─ ─ ─ ─ ┐                      │
 │ 410: Determine first information, where │             │
 │ the first information indicates whether │             │
 │   the first terminal device uses a first │            │
 │   resource as a receiving resource, the │             │
 │ first resource is a resource that overlaps│           │
 │  a second resource in time domain and  │              │
 │  that is adjacent to the second resource │             │
 │   in frequency domain, and the second  │              │
 │ resource is a reserved sending resource │              │
 │       of the first terminal device     │              │
 └─ ─ ─ ─ ─┬─ ─ ─ ─ ─ ─ ─ ─ ─ ─ ┘                      │
           │                                            │
           │        420: First information              │
           │───────────────────────────────────────────▶│
           │                                            │
           │                              ┌─ ─ ─ ─ ─ ─ ─┴─ ─ ─ ─ ─ ─ ─ ┐
           │                              │ 430: Determine, based on the first │
           │                              │ information, a candidate resource │
           │                              │  set for sending data to the first │
           │                              │          terminal device          │
           │                              └─ ─ ─ ─ ─ ─ ─┬─ ─ ─ ─ ─ ─ ─ ┘
           │                                            │
```

FIG. 4

Resource selection window of
a first terminal device

Subchannel 4

Subchannel 3

Subchannel 2

Subchannel 1

▨  Scheduling of a resource occupied by
    sending of the first terminal device

■  First SCI

▦  Resource reserved for the first SCI, that is, second resource

▨  Resource that overlaps the second resource in time
    domain and that is adjacent to the second resource in
    frequency domain, that is, first resource

FIG. 5

600

A first terminal device determines a third resource, where the third resource is a
receiving resource of the first terminal device    610

The first terminal device determines whether to send data on a fourth resource,
where the fourth resource is a resource that overlaps the third resource in time
domain and that is adjacent to the third resource in frequency domain    620

FIG. 6

Resource selection window of
a first terminal device

Subchannel 4

Subchannel 3

Subchannel 2

Subchannel 1

Scheduling of a resource occupied by
receiving of the first terminal device

Second SCI

Resource reserved for the second SCI, that is, third resource

Resource that overlaps the third resource in time
domain and that is adjacent to the third resource in
frequency domain, that is, fourth resource

FIG. 7

800

First terminal device

Second terminal device

810: Determine third information, where
the third information indicates that a first
PSFCH is a channel for the first terminal
device to receive or send feedback
information, and the first PSFCH is one
of at least two PSFCHs

820: Third information

FIG. 8

FIG. 9

EP 4 576 912 A1

1000

```
┌─────────────────────────────────────────────────────────────┐
│  A physical layer of a first terminal device reports a candidate resource set to a   │╲
│  MAC layer, where the candidate resource set includes N second resource              │  1001
│                            elements                                                   │╱
└─────────────────────────────────────────────────────────────┘
```

┌─────────────────────────────────────────────────────────────┐
│  The MAC layer of the first terminal device determines to send second data on        │
│  the N second resource elements, where the N second resource elements are            │
│  determined based on M first resource elements, and at least one of the M first      │  ╲
│  resource elements and at least one of the N second resource elements overlap in     │  1010
│  time domain and are contiguous in frequency domain                                   │
└─────────────────────────────────────────────────────────────┘

FIG. 10

Resource selection window of a first terminal device

| | | | $R_{4,y}$ | | $R_{4,y+2}$ | | $R_{4,y+4}$ |
|---|---|---|---|---|---|---|---|
Subchannel 4

Subchannel 3  ... $R_{3,y+1}$ ... $R_{3,y+3}$ $R_{3,y+4}$

Subchannel 2

Subchannel 1  $R_{1,y}$  $R_{1,y+2}$  $R_{1,y+4}$

Slot $t_y$            Slot $t_{y+2}$

▨ Candidate resource in a candidate resource set $S_A$

▦ Resource occupied by an existing sending service of the first terminal device (that is, M first resource elements occupied by first data)

FIG. 11

1200

Transceiver unit 1210

Processing unit 1220

FIG. 12

1300

Processor 1310

Transceiver 1330

Memory 1320

FIG. 13

Chip system 1400

Logic circuit 1410

Input/Output interface 1420

FIG. 14

## INTERNATIONAL SEARCH REPORT

| International application No. |
| --- |
| **PCT/CN2023/118454** |

### A. CLASSIFICATION OF SUBJECT MATTER

H04W 72/541(2023.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, WPABS, ENTXTC, DWPI, VEN, 3GPP: 侧行链路, 侧链路, 指示, 时域, 重叠, 频域, 接收, 发送, 资源, sidelink, SL, PSCCH, PSSCH, PSFCH, SBFD, receiv+, send, frequency, domain, time, indicat+, overlap, resource

### C. DOCUMENTS CONSIDERED TO BE RELEVANT

| Category* | Citation of document, with indication, where appropriate, of the relevant passages | Relevant to claim No. |
| --- | --- | --- |
| A | WO 2021087874 A1 (FUJITSU LIMITED) 14 May 2021 (2021-05-14) description, page 2, paragraph 4 to page 3, second-to-last paragraph, and page 8, paragraph 1 to page 9, last paragraph, and claims 1-32 | 1-33 |
| A | WO 2021134798 A1 (GUANGDONG OPPO MOBILE TELECOMMUNICATIONS CORP., LTD.) 08 July 2021 (2021-07-08) description, paragraphs 0117-0130 | 1-33 |
| A | CN 113453196 A (VIVO COMMUNICATION TECHNOLOGY CO., LTD.) 28 September 2021 (2021-09-28) entire document | 1-33 |
| A | US 2021321387 A1 (QUALCOMM INC.) 14 October 2021 (2021-10-14) entire document | 1-33 |
| A | WO 2021026932 A1 (GUANGDONG OPPO MOBILE TELECOMMUNICATIONS CORP., LTD.) 18 February 2021 (2021-02-18) entire document | 1-33 |

☐ Further documents are listed in the continuation of Box C.    ☑ See patent family annex.

| | |
| --- | --- |
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **17 November 2023** | **29 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

International application No.

**PCT/CN2023/118454**

| Patent document cited in search report | | | Publication date (day/month/year) | Patent family member(s) | | | Publication date (day/month/year) |
|---|---|---|---|---|---|---|---|
| WO | 2021087874 | A1 | 14 May 2021 | JP | 2023501201 | A | 18 January 2023 |
| | | | | US | 2022256579 | A1 | 11 August 2022 |
| | | | | CN | 114557072 | A | 27 May 2022 |
| WO | 2021134798 | A1 | 08 July 2021 | CN | 114830697 | A | 29 July 2022 |
| | | | | US | 2022330241 | A1 | 13 October 2022 |
| | | | | EP | 4087291 | A1 | 09 November 2022 |
| CN | 113453196 | A | 28 September 2021 | WO | 2021190628 | A1 | 30 September 2021 |
| | | | | KR | 20220161432 | A | 06 December 2022 |
| | | | | US | 2022408415 | A1 | 22 December 2022 |
| | | | | EP | 4132160 | A1 | 08 February 2023 |
| | | | | JP | 2023518893 | A | 08 May 2023 |
| US | 2021321387 | A1 | 14 October 2021 | WO | 2021206868 | A1 | 14 October 2021 |
| | | | | US | 2023309128 | A1 | 28 September 2023 |
| | | | | TW | 202143675 | A | 16 November 2021 |
| | | | | EP | 4133817 | A1 | 15 February 2023 |
| | | | | CN | 115316003 | A | 08 November 2022 |
| WO | 2021026932 | A1 | 18 February 2021 | CN | 113728706 | A | 30 November 2021 |
| | | | | AU | 2019461152 | A1 | 24 February 2022 |
| | | | | EP | 3979732 | A1 | 06 April 2022 |
| | | | | KR | 20220047570 | A | 18 April 2022 |
| | | | | US | 2022123822 | A1 | 21 April 2022 |
| | | | | CN | 114390705 | A | 22 April 2022 |
| | | | | JP | 2022548466 | A | 21 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211151512

- CN 202211359574